# FASCICULE DE BREVET EUROPEEN

(11) **EP 3 552 323 B1**
(45) Date de publication et mention de la délivrance du brevet: **02.09.2020**
(21) Numéro de dépôt: 17781503.2
(22) Date de dépôt: 12.10.2017
(51) Int. Cl.: H04B 7/185, H04L 29/06, H04L 9/16, H04W 12/02, H04W 12/00, B64C 39/02

(54) **PLATEFORME-RELAIS DE COMMUNICATION DE DONNEES DE TELEMESURES DEPUIS UN OU PLUSIEURS SATELLITE(S) D'OBSERVATION DEFILANT(S) VERS LE SOL**
RELAISPLATTFORM ZUR ÜBERTRAGUNG VON TELEMETRIEDATEN VON EINEM ODER MEHREREN BEWEGLICHEN BEOBACHTUNGSSATELLITEN ZUM BODEN
RELAY PLATFORM FOR COMMUNICATING TELEMETRY DATA FROM ONE OR MORE MOVING OBSERVATION SATELLITE(S) TO THE GROUND

(30) Priorité: 08.12.2016 FR 1601749
(43) Date de publication de la demande: 16.10.2019
(73) Titulaire: THALES, 92400 Courbevoie (FR)
(72) Inventeur: MARTINERIE, Francis, 31100 Toulouse (FR); SAINCT, Hervé, 31100 Toulouse (FR); TARIDE, Serge, 31100 Toulouse (FR); GAYRARD, Jean Didier, 31100 Toulouse (FR)
(74) Mandataire: Vincent, Célien
(86) Numéro de dépôt international: PCT/EP2017/076065
(87) Numéro de publication internationale: WO 2018/103926

(56) Documents cités:
- WO-A1-2016/026023
- US-A- 6 151 308
- US-A1- 2015 204 974

## Description

La présente invention concerne des plateformes de communications servant de relais de transmission de données à haut débit entre un ou plusieurs satellites d'observation défilants, i.e. non géostationnaires, et une ou plusieurs station(s) sol de réception desdites données d'observation, dénommées par la suite des données de télémesures des satellites d'observation.

La présente invention concerne également des systèmes d'observation utilisant de telles plateformes de communication comme relais.

Il est connu que l'un des facteurs limitant des systèmes d'observation par satellites défilants non géostationnaires est la capacité de la voie descendante d'un satellite défilant à redescendre vers la ou les stations sol de réception toutes les images prises par le satellite lorsque ledit satellite défilant passe au-dessus de ladite station sol de réception en visibilité géométrique par rapport audit satellite.

Afin d'augmenter la capacité de la voie descendante de chacun des satellites défilants, les systèmes d'observation satellitaires ont vu ces dernières décennies une escalade des fréquences utilisées pour les liaisons descendantes, progressant désormais vers les bandes X et Ka, de façon à pouvoir acheminer et descendre de plus en plus de données d'images dans la même durée de passage du satellite en visibilité de la station.

Les projets actuels visent à continuer cette progression vers les fréquences optiques qui permettraient de télécharger encore plus de données de télémesures dans le même laps de temps de survol de la station sol de réception par le satellite.

Toutefois dès les bandes radio très haute fréquence, c'est-à-dire au dessus de la bande UHF, l'atténuation due à la présence de nuages dans l'atmosphère se traduit par une limitation importante du débit, et cette atténuation devient rédhibitoire pour les liaisons optiques.

Une solution permettant d'utiliser des fréquences plus hautes sur la voie descendante consiste à utiliser une plateforme-relais de communication, embarquée à bord d'un aéronef, par exemple un drone ou un ballon, évoluant à haute altitude au-dessus des nuages, ce qui permet d'éliminer l'atténuation rédhibitoire d'un signal radioélectrique causée par les nuages, ceux-ci n'intervenant plus que dans la retransmission entre la plateforme de communication et la station sol de réception, laquelle retransmission a lieu sur une distance beaucoup plus courte (quelques kilomètres à quelques dizaines au lieu de plusieurs centaines à milliers de kilomètres) et en un lieu permettant un usage d'allocations spécifiques de fréquences et bandes de transmission, avec en outre l'avantage majeur de pouvoir être permanente.

En dépit de l'existence d'exigences règlementaires pour les bandes utilisables entre les relais haute altitude et le sol et même si ces bandes ne sont pas forcément avantageuses en termes de débit accessible, ces bandes utilisables sont moins congestionnées que les bandes allouées aux satellites.

L'utilisation d'un relais haute altitude comme relais entre le sol et les satellites défilants est très intéressante : puisque le relais est au-dessus des nuages, une liaison optique descendante entre le satellite défilant et la plateforme-relais haute altitude autorise des communications à haut débit avec une disponibilité de 100% pendant le passage du satellite en visibilité du relais, typiquement quelques minutes à une dizaine de minutes pour des satellites en orbites basses. La deuxième liaison descendante entre la plateforme-relais et la station sol de réception peut être réalisée en radiofréquence dans une bande de fréquences moins sensible aux nuages et aux précipitations, avec un débit moindre compensé par une visibilité permanente. Tandis qu'un satellite d'observation défilant passe en visibilité d'une station sol 40 minutes environ par jour, le relais haute altitude permet un gain d'un facteur supérieur à 30 sur le besoin en débit depuis la station-relais vers le sol.

La demande de brevet US 6,151, 308 A décrit un système satellitaire utilisant des plateformes-relais à haute altitude qui permettent de définir de manière plus fine des cellules de communications, d'éviter les obstructions des liaisons satellitaires entre les terminaux et les satellites défilants à orbite basse, notamment lorsque les terminaux se trouvent en milieu urbain, et ainsi permettre l'accès d'un plus grand nombre de terminaux au réseau du système de communications. La demande de brevet US 6,151, 308 A décrit une utilisation avantageuse du système satellitaire dans le cadre d'une mission d'observation qui permet d'obtenir des images plus fines et de meilleure résolution en embarquant les instruments d'observation sur les plateformes relais à haute altitude au lieu des satellites défilants. Le document US 6,151, 308 A ne décrit pas l'utilisation de plateforme-relais de communication pour faciliter le rapatriement des télémesures volumineuses des satellites défilants d'observation et ne décrit pas comment est gérée la sécurité des transmissions au niveau du système satellitaire d'observation, et en particulier au niveau de la plateforme-relais de communications, dans le cas de relais avec une multiplicité de satellites et/ou de stations sol de réception multiples.

Un premier problème technique est de fournir une architecture d'intégration des fonctions de sécurité, au niveau du système satellitaire d'observation et en particulier au niveau de la plateforme-relais de communications, qui simplifie la gestion de la sécurité des transmissions dans le cas d'une multiplicité de satellites et/ou de stations sol de réception multiples.

Un deuxième problème technique est d'augmenter la disponibilité et la capacité de la liaison descendante depuis la plateforme-relais vers la station sol pour remédier à une baisse de débit rédhibitoire ou une absence de liaison descendante entre la plateforme-relais et la station sol, causée par exemple par l'interposition de nuages très absorbants vis-à-vis du rayonnement.

A cet effet, l'invention a pour objet une plateforme-relais de communication d'un système spatial d'observation, configurée pour être embarquée à bord d'un aéronef évoluant au-dessus des nuages, et configurée pour servir de relais haute altitude de transmission à un débit élevé de données spatiales d'observation, dénommées télémesures, entre au moins un satellite d'observation défilant non géostationnaire et au moins une station sol de destination et de réception desdites données, la transmission depuis le ou les satellites d'observation vers le relais haute altitude pouvant avoir lieu dans une ou des fenêtres de visibilité prédéterminées du ou des satellites d'observation défilant vis-à-vis de l'aéronef, et la transmission de données de l'aéronef vers le sol pouvant avoir lieu de façon permanente. La plateforme-relais comprend une première antenne de réception, configurée pour recevoir dans une première bande optique ou radiofréquence des données d'observation, transmises sur une première liaison spatiale sans fil descendante, reliant au moins un satellite d'observation défilant à la plateforme-relai, et une première interface de réception, connectée à la première antenne de réception et configurée pour démoduler les données reçues par la première antenne et les sauvegarder dans une mémoire, et une deuxième interface d'émission, configurée pour moduler les données d'observation stockées dans la mémoire, et émettre dans une deuxième bande radiofréquence lesdites données modulées via une deuxième d'antenne émission sur une deuxième liaison aérienne sans fil descendante reliant directement la plateforme-relais à au moins une station sol de destination. La plateforme-relais est caractérisée en ce qu'elle comprend une première chaîne de décryptage/cryptage à double niveau descendant des données de télémesures rapatriées depuis au moins un satellite d'observation défilant(s) vers la ou les stations sol de destination.

Suivant des modes particuliers de réalisation, la plateforme-relais de communication comprend l'une ou plusieurs des caractéristiques suivantes :
•- la première bande de fréquences de la première liaison spatiale sans fil descendante est une bande optique ou radiofréquence, et/ou la deuxième bande de fréquences de la deuxième liaison aérienne descendante est une bande optique ou radiofréquence ;
•- la plateforme-relais comprend en outre une troisième interface de réception, configurée pour démoduler des données de télécommandes sécurisées de la plateforme-relais et/ou du ou des satellite(s) défilant(s) d'observation, élaborées et transmises sur une troisième liaison dédiée par un centre de contrôle terrestre du système spatial d'observation ;
•- la première chaîne de décryptage/encryptage à double niveau descendant est configurée :
   - * pour chaque satellite d'observation défilant et les données de télémesures reçues correspondantes, décrypter à un premier niveau descendant lesdites données de télémesures, cryptées et transmises par ledit satellite d'observation défilant sur la première liaison spatiale descendante et démodulées par la première interface, en utilisant des clés actives de décryptage des données des données de télémesures de premier niveau descendant, associée audit satellite défilant et à des indices de clés actives d'encryptage/décryptage des données de télémesures de premier niveau descendant, lesdits indices de clés actives d'encryptage/décryptage étant transmis conjointement avec lesdites données de télémesures cryptées et étant associées de manière unique audit satellite d'observation défilant et auxdites clés actives de décryptage de premier niveau descendant ; puis
   - * pour chaque station sol de destination et les données correspondantes qui leur sont destinées de télémesures, décryptées au premier niveau descendant et provenant d'un ou plusieurs satellites d'observation, encrypter à un deuxième niveau descendant les données de télémesures décryptées au premier niveau descendant en utilisant une clé active d'encryptage des données de télémesures de deuxième niveau descendant, associée à ladite station sol de destination, et adjoindre auxdites données cryptées de deuxième niveau descendant un indice de clé active d'encryptage/décryptage des données de télémesures de deuxième niveau descendant, associé de manière unique à ladite station sol de destination et à ladite clé active d'encryptage de deuxième niveau descendant ;
•- la première chaîne de décryptage/encryptage à double niveau descendant des données de télémesures, rapatriées depuis le ou les satellite(s) défilant(s) vers la ou les station(s) sol de destination, comprend un premier module de gestion des clés d'encryptage/décryptage du double niveau descendant, un deuxième module de décryptage à un premier niveau descendant des données de télémesures, transmises sur la première liaison spatiale descendante et démodulées par la première interface, et un troisième module de cryptage à un deuxième niveau descendant des données de télémesure décryptées au premier niveau descendant ; et le premier module de gestion des clés d'encryptage/décryptage à double niveau descendant des données de télémesures est configuré pour recevoir initialement un premier ensemble d'un ou plusieurs jeux de clés de décryptage de télémesures de premier niveau descendant, et recevoir initialement un deuxième ensemble d'un ou plusieurs jeux de clés d'encryptage de données de télémesures de deuxième niveau descendant ; et chaque jeu de clés de décryptage de télémesures concernant le premier niveau descendant est associé à un satellite d'observation défilant, et chaque clé de décryptage de données de télémesures au premier niveau descendant de chaque jeu est appariée à et identifiée de manière unique par un indice de clé d'encryptage/décryptage de premier niveau descendant ; et chaque jeu de clés de cryptage de données de télémesures concernant le deuxième niveau descendant est associé à une station sol de destination, et chaque clé de cryptage de données de télémesures au deuxième niveau descendant de chaque jeu est appariée à et identifiée de manière unique par un indice de clé de d'encryptage/décryptage au deuxième niveau descendant ;
•- le premier module de gestion des clés d'encryptage/décryptage à double niveau descendant des données de télémesures est configuré pour exécuter, sur réception via la troisième interface de télécommandes dédiés, sécurisées et envoyées par le centre de contrôle terrestre, des modifications d'une partie ou de la totalité des clés de décryptage des données de télémesures au premier niveau descendant et/ou des clés de cryptage de données de télémesures au deuxième niveau descendant ;
•- la première antenne de réception, la première interface de réception, et la mémoire sont configurées pour recevoir, démoduler et sauvegarder séparément des données de télémesures, cryptées au premier niveau descendant et émises par au moins deux satellites d'observation défilants non géostationnaires sur la première liaison spatiale descendante, et/ou la deuxième antenne d'émission, la deuxième interface d'émission, sont configurés pour moduler et émettre séparément les données de télémesures cryptées au deuxième niveau descendant vers au moins une stations sol de destination sur la deuxième liaison aérienne sans fil descendante; et la première chaîne de décryptage/encryptage à double niveau descendant des données de télémesures, rapatriées depuis le ou les satellite(s) défilant(s) vers la ou les station(s) sol de destination, comprend un allocateur matriciel des télémesures décryptées, reçues d'un même satellite d'observation défilant, à différentes stations sol de destination, suivant une table d'allocation chargée par télécommandes, l'allocateur matriciel étant connecté en série entre le deuxième module de décryptage et le troisième module d'encryptage ;
•- la plateforme-relais comprend en outre une deuxième chaîne de décryptage/encryptage à double niveau montant des données de télécommandes du ou des satellite(s) défilant(s) d'observation reçues via la troisième interface de réception de la troisième liaison dédiée de télécommandes sécurisées en provenance du centre de contrôle terrestre ;
•- la deuxième chaîne de décryptage/encryptage à double niveau montant des données de télécommandes du ou des satellite(s) d'observation défilant(s) est configurée :
   - * pour chaque satellite d'observation défilant de destination et les données de télécommandes dudit satellite correspondantes, décrypter à un premier niveau montant les données de télécommandes, transmises par le centre de contrôle terrestre sur la troisième liaison et démodulées par la troisième interface, en utilisant une clé active de décryptage des données de télécommandes de premier niveau montant, associée audit satellite d'observation et à un indice de clé active d'encryptage/décryptage des données de télécommande de premier niveau montant, ledit indice de clé active d'encryptage/décryptage des données de télécommandes étant transmis conjointement avec les données de télécommandes cryptées par le centre de contrôle terrestre et étant associé de manière unique au satellite défilant et à ladite clé de décryptage de premier niveau montant ; puis
   - * pour chaque satellite d'observation défilant de destination et les données de télécommandes décryptées qui lui sont destinées, encrypter à un deuxième niveau montant les données de télécommandes décryptées au premier niveau montant en utilisant une clé active de d'encryptage des données de télécommandes de deuxième niveau montant, la clé active d'encryptage des données de télécommandes de deuxième niveau montant étant associée au satellite d'observation de destination, et adjoindre auxdites données de télécommandes de deuxième niveau montant, un indice de clé active d'encryptage/décryptage de télécommandes, associé de manière unique audit satellite d'observation et à ladite clé active d'encryptage de deuxième niveau montant ;
•- la plateforme-relais comprend en outre une quatrième interface d'émission, configurée pour moduler des données de télécommandes d'au moins un satellite d'observation défilant, et émettre lesdites données modulées de télécommandes via une quatrième antenne d'émission sur une quatrième liaison spatiale sans fil montante reliant directement la plateforme-relais au(x) satellite(s) d'observation défilants; et dans laquelle la deuxième chaîne de décryptage/encryptage à double niveau montant des données de télécommandes du ou des satellite(s) défilant(s) d'observation comprend un quatrième module de gestion des clés d'encryptage/décryptage du double niveau montant, un cinquième module de décryptage à un premier niveau montant des données de télécommandes, transmises sur la troisième liaison et démodulées par la troisième interface, et un sixième module de cryptage à un deuxième niveau montant des données de télécommandes décryptées au premier niveau montant ; et le quatrième module de gestion des clés d'encryptage/décryptage à double niveau montant des télécommandes du ou des satellite(s) défilant(s) est configuré en outre pour :
   - * recevoir initialement un troisième ensemble d'un ou plusieurs jeux de clés de déchiffrage de télécommandes de premier niveau montant, et
   - * recevoir initialement un quatrième ensemble d'un ou plusieurs jeux de clés d'encryptage de télécommandes de deuxième niveau montant; et chaque jeu de clés de décryptage de télécommandes concernant le premier niveau montant est associé à un satellite d'observation défilant, et chaque clé de décryptage de données de télécommandes au premier niveau montant de chaque jeu est appariée à et identifiée de manière unique par un indice de clé d'encryptage/décryptage des données de télécommandes au premier niveau montant ; et chaque jeu de clés d'encryptage de télécommandes concernant le deuxième niveau montant est associé à un satellite d'observation défilant de destination, chaque clé d'encryptage de données de télécommandes au deuxième niveau montant de chaque jeu est appariée à et identifiée de manière unique par un indice de clé d'encryptage/décryptage au deuxième niveau montant ;
•- le quatrième module de gestion des clés d'encryptage/décryptage à double niveau des données de télécommandes du ou des satellite(s) défilant(s) est configuré pour exécuter, sur réception via la troisième interface de télécommandes dédiés, sécurisées et envoyées par le centre de contrôle terrestre, des modifications d'une partie ou de la totalité des clés de décryptage des données de télécommandes au premier niveau montant et/ou des clés de cryptage de données de télécommandes au deuxième niveau montant ;
•- la plateforme-relais comprend en outre une cinquième interface d'émission, configurée pour moduler les données d'observations stockées dans la mémoire, et émettre dans une cinquième bande optique ou radiofréquence lesdites données modulées via une cinquième antenne d'émission sur une cinquième liaison spatiale sans fil montante reliant directement la plateforme-relais à un satellite géostationnaire, la mémoire étant configurée pour router, de manière pilotée depuis le sol par l'envoi d'une commande dédiée, les données de télémesures sur la cinquième interface d'émission, au lieu de la deuxième interface d'émission prise comme port de destination dans un mode nominal.

L'invention a également pour objet un système spatial comprenant au moins un satellite(s) d'observation défilant(s) non géostationnaire(s), au moins une station(s) sol de destination et de réception de données d'observation émises à un débit élevé par l'au moins un satellite d'observation, un aéronef évoluant à une altitude élevée dépassant celle des nuages, et une plateforme-relais de communications, embarquée à bord de l'aéronef et servant de relais de transmission des données d'observation ou télémesures entre l'au moins un satellite d'observation et les au moins deux stations sol de destination et de réception des données, dans lequel la plateforme-relais de communications est définie selon les caractéristiques décrites ci-dessus, et l'aéronef est compris dans l'ensemble formé par les drones, les ballons dirigeables stratosphériques ou aéroplanes.

Suivant des modes particuliers de réalisation, le système spatial comprend en outre un satellite géostationnaire et au moins une station sol distante et de déport, connectée audit satellite géostationnaire par une liaison spatiale géostationnaire descendante, et la plateforme-relais comporte une cinquième interface d'émission, configurée pour moduler les données d'observations stockées dans la mémoire, et émettre dans une cinquième bande optique ou radiofréquence lesdites données modulées via une cinquième antenne d'émission sur une cinquième liaison spatiale sans fil montante reliant directement la plateforme-relais à un satellite géostationnaire, la mémoire étant configurée pour router, de manière pilotée depuis le sol par l'envoi d'une commande dédiée, les données de télémesures sur la cinquième interface d'émission au lieu de la deuxième interface d'émission prise comme port de destination dans un mode nominal.

L'invention sera mieux comprise à la lecture de la description de plusieurs formes de réalisation qui va suivre, donnée uniquement à titre d'exemple et faite en se référant aux dessins sur lesquels :

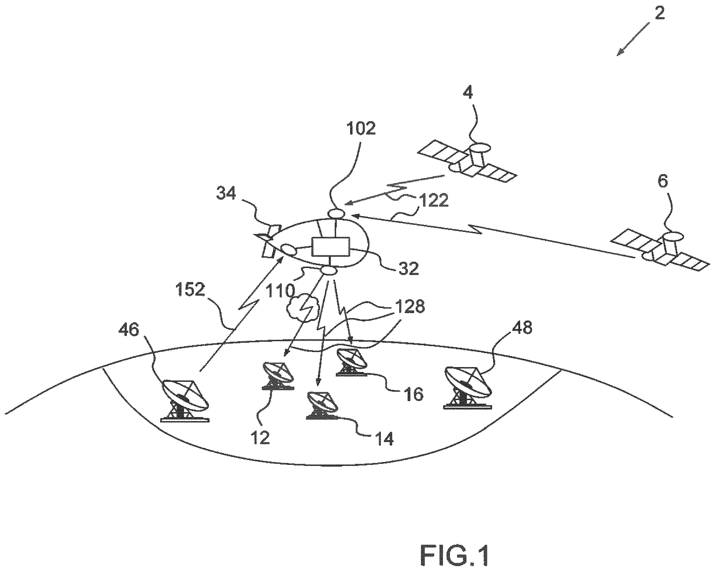

•- la Figure 1 est une vue générale d'un système spatial selon l'invention utilisant une plateforme-relais embarquée à bord d'un aéronef piloté au dessus des nuages ;

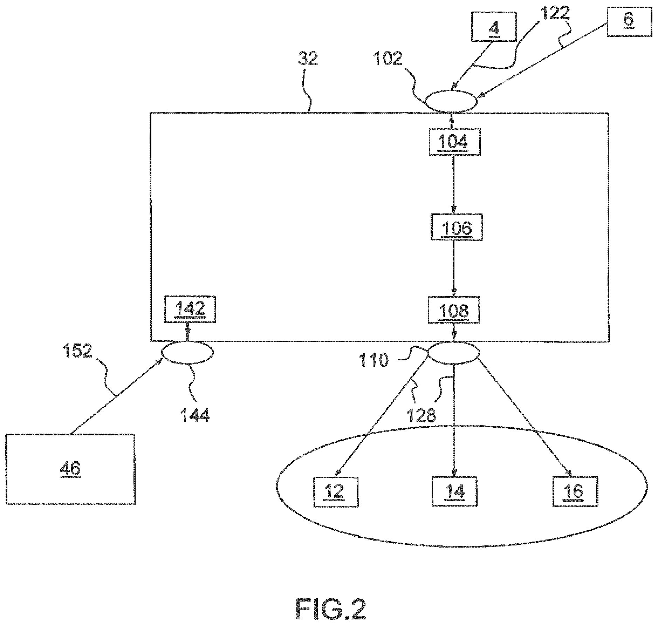

•- la Figure 2 est une vue de l'architecture générale de la plateforme-relais de l'invention et de ses principales interfaces avec les autres éléments du système spatial d'observation de la Figure 1 ;

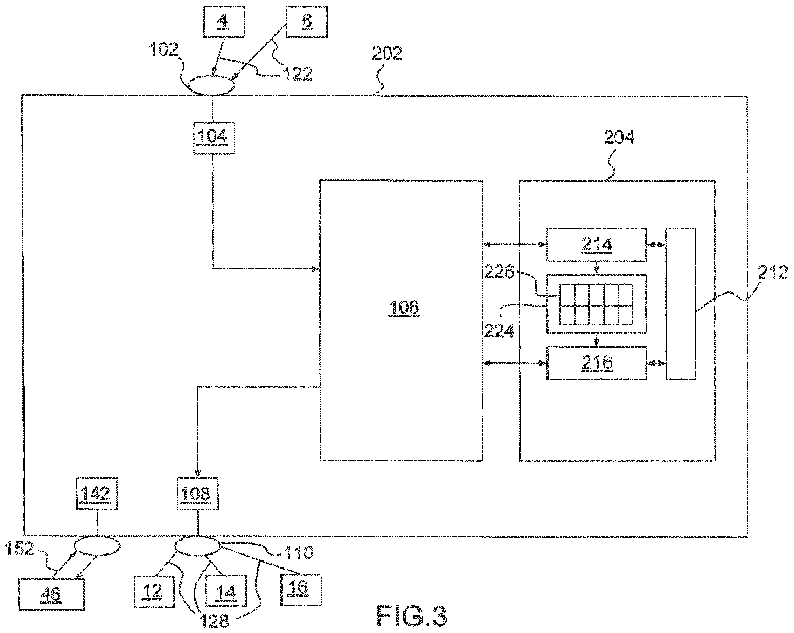

•- la Figure 3 est une vue d'un premier mode de réalisation d'une plateforme-relais selon l'invention, dérivée de l'architecture générale de la Figure 2 qui intègre de manière optimale les fonctions de sécurité concernant la protection en descente des données de télémesures des satellites d'observation défilants;

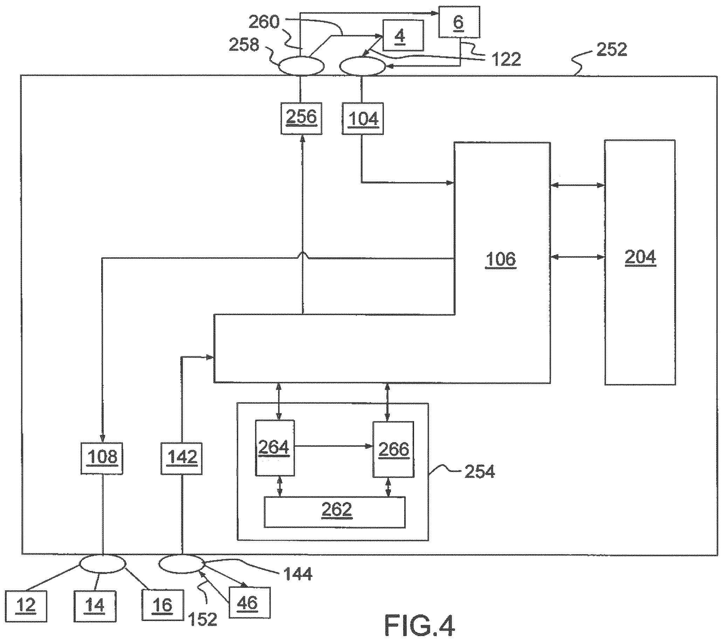

•- la Figure 4 est une vue d'un deuxième mode de réalisation de la plateforme-relais selon l'invention, dérivé du premier mode de réalisation de la Figure 3, qui intègre également en supplément des fonctions de sécurité concernant la protection en montée des télécommandes des satellites d'observation défilants ;

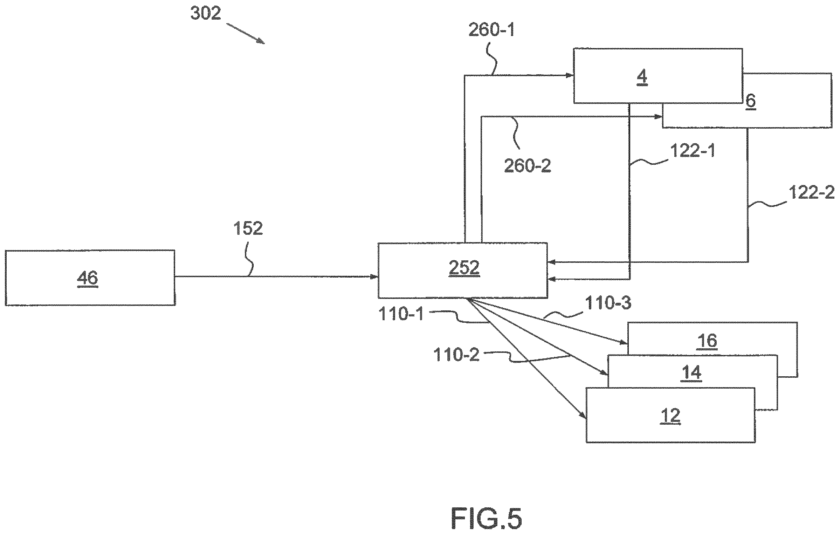

•- la Figure 5 est une vue générale de l'architecture de communications du système spatial d'observation de la Figure 1, intégrant les fonctions de sécurité et correspondant aux deuxième mode de réalisation de la plateforme-relais de la Figure 4, la plateforme-relais intégrant la sécurisation des télémesures et des télécommandes des satellites d'observation défilants, et recevant directement les télécommandes des satellites d'observation d'un centre de contrôle terrestre;

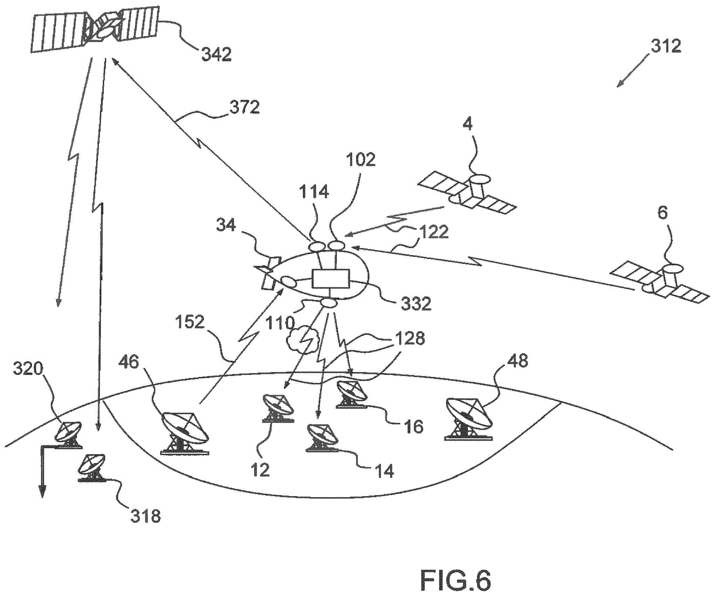

•- la Figure 6 est une vue d'une forme particulière de réalisation du système spatial de la Figure 1 qui utilise de manière prépondérante une plateforme-relais, embarquée à bord d'un aéronef piloté au dessus des nuages, et de manière accessoire un satellite géostationnaire comme second relais ;

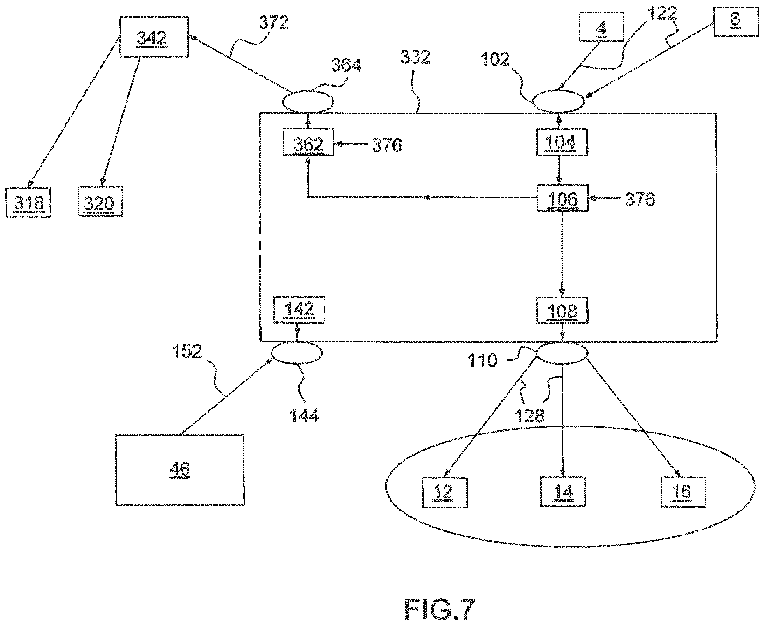

•- la Figure 7 est une vue de l'architecture de la plateforme-relais de l'invention et de ses principales interfaces avec les autres éléments du système spatial d'observation de la Figure 6 ;

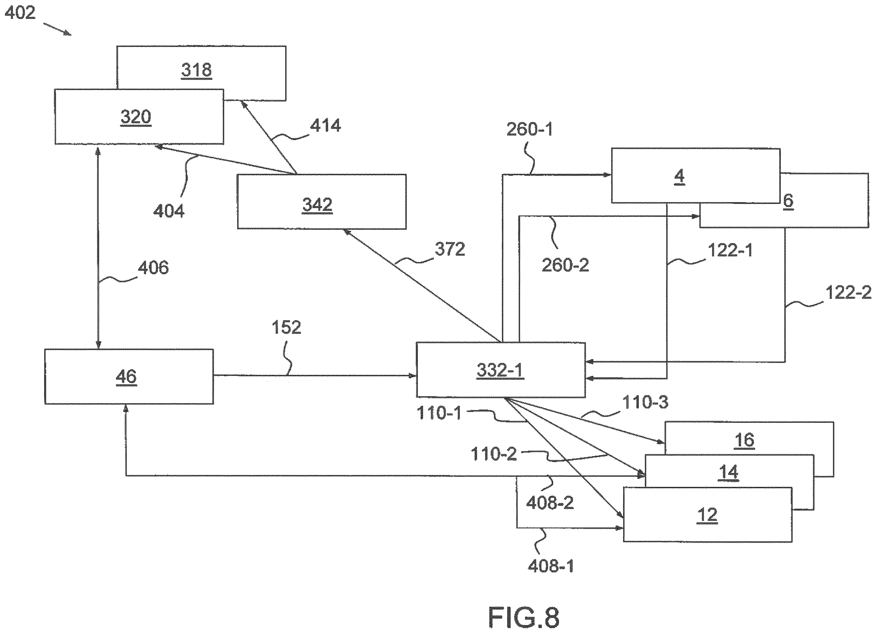

•- la Figure 8 est une vue d'une première architecture de communications du système spatial d'observation de la Figure 6 dans laquelle la plateforme-relais intègre de manière optimale à la fois les fonctions de sécurité concernant la protection en descente des données de télémesures d'observation et les fonctions de sécurité concernant la protection en montée des télécommandes des satellites d'observation défilants ;

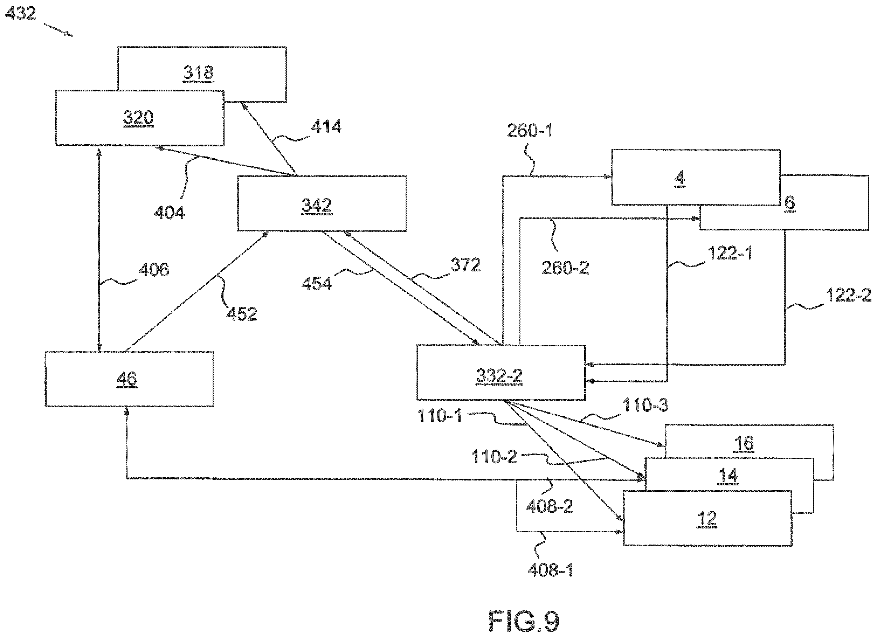

•- la Figure 9 est une vue d'une deuxième architecture de communications du système spatial d'observation de la Figure 6 dans laquelle la plateforme-relais intègre seulement la sécurisation des télémesures des satellites d'observation défilants et sert seulement de relais transparent vis-à-vis de la sécurisation des données de télécommandes des satellites d'observation ;

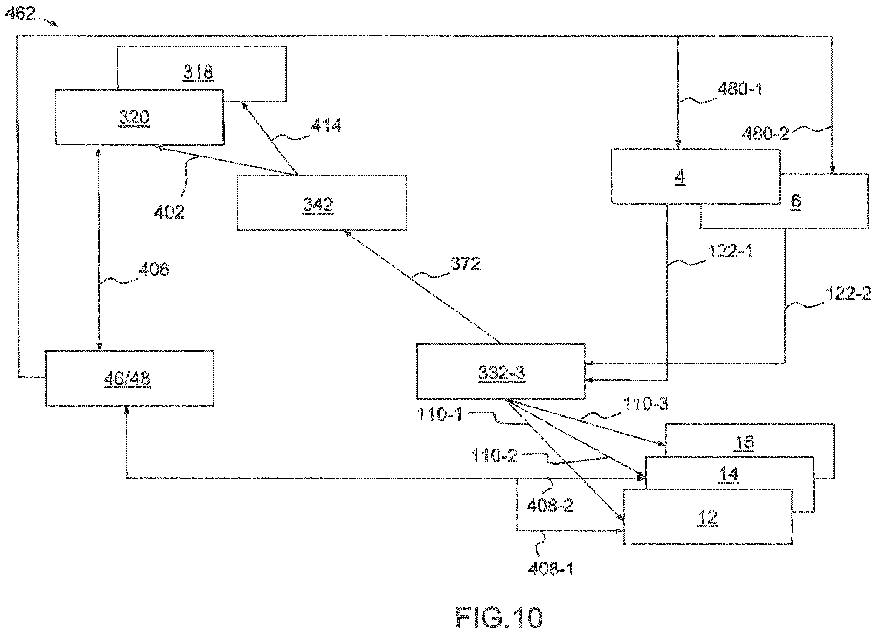

•- la Figure 10 est une vue d'une troisième architecture de communications du système spatial d'observation de la Figure 6 dans laquelle la plateforme-relais intègre seulement la sécurisation des télémesures des satellites d'observation défilants et ne participe pas à la transmission des données de télécommandes depuis le centre de contrôle terrestre vers les satellites d'observation défilants.

De manière générale, un système satellitaire d'observation selon l'invention utilise une plateforme-relais haute altitude de communications qui est embarquée à bord d'un aéronef évoluant au-dessus des nuages, par exemple un drone ou un ballon stratosphérique, et qui permet d'étendre la capacité de redescente des télémesures de satellites défilants au sol des télémesures.

La plateforme-relais est configurée pour relayer les données directement vers au moins une station sol de destination en visibilité permanente de l'aéronef,
•- soit avec un débit identique au débit de la liaison descendante entre le satellite d'observation et la plateforme-relais,
•- soit avec un plus faible débit au moyen d'une mémoire-tampon à bord de la plateforme-relais, ce qui est réalisable en raison de la géométrie orbitale des satellites défilants d'observation qui implique de brèves fenêtres de téléchargement espacées de temps morts.

Le résultat est une augmentation de débit potentiel, et donc du service d'observation, par exemple imagerie ou autres données d'observation (radar, radiofréquence RF, etc.), de l'ordre de 150% et pouvant dépasser 1000%.

Par ailleurs, la plateforme-relais peut être utilisée pour des contextes dans lesquels des données de satellites multiples sont transmises vers des stations sol multiples.

Le concept de base de l'invention qui résout le premier problème technique, à savoir fournir une architecture d'intégration des fonctions de sécurité dans le système satellitaire d'observation, simplifiée et compatible des transmissions dans le cas de constellations de satellites et/ou de stations sol de réception multiples, est fondé sur la maximisation de l'intégration des fonctions sécuritaires et la gestion des liaisons sécurisées du système spatial d'observation au sein de la plateforme-relais de communications.

Suivant la Figure 1 et un exemple de réalisation de l'invention, un système d'observation spatial 2 comprend :
•- au moins un satellite d'observation défilant non géostationnaire, ici deux satellites d'observation 4 et 6,
•- au moins deux stations sol de destination et de réception 12, 14, 16 de données d'observation, émises à un débit élevé par l'au moins un satellite d'observation 4,6,
•- une plateforme-relais de communications 32, embarquée à bord d'un aéronef 34 et servant de relais de transmission des données d'observation, dénommées également ici télémesures d'observation, entre l'au moins un satellite(s) d'observation défilant(s) 4, 6 et les stations sol de destination et de réception 12, 14, 16 des données d'observation,
•- l'aéronef 34 de transport de la plateforme-relais 32,
•- un premier centre de contrôle 46 de la plateforme-relais 32, et
•- un deuxième centre de contrôle 48 des satellites d'observation défilants 4, 6.

L'aéronef 34 est compris dans l'ensemble formé par les drones, les ballons dirigeables ou les aéroplanes. Ici, sur la Figure 1, l'aéronef 34 représenté est un ballon dirigeable stratosphérique.

L'aéronef 34 est configuré et piloté pour évoluer au dessus des nuages atmosphériques hydriques, permettant ainsi l'établissement de liaisons spatiales, descendantes depuis les satellites d'observation 4, 6 vers l'aéronef 34, et le cas échéant montantes depuis la plateforme-relais 32 vers satellites d'observation 4, 6, par exemple dans une bande optique ou une bande radio RF à fréquences élevées.

L'aéronef 34 est piloté au dessus des nuages de sorte à se trouver au plus près et en visibilité optique des stations sol de destination et de réception 12, 14, 16, dénommées «stations locales », et éviter des atténuations causées par des éléments atmosphériques éventuels comme les nuages atmosphériques.

De manière générale, les éléments atmosphériques, formant un écran au rayonnement, sont principalement des nuages hydriques mais peuvent être également des vents de sable, des nuages de polluants atmosphériques en fonction des régions terrestres considérées.

Suivant la Figure 2 et un exemple général d'architecture de la plateforme-relais selon l'invention, la plateforme-relais de communication 32 de la Figure 1 est configurée pour être embarquée à bord de l'aéronef 34, piloté pour évoluer au-dessus des nuages, et elle est configurée pour supporter les conditions environnementales associées au milieu d'évolution de l'aéronef 34, par exemple la stratosphère pour un ballon stratosphérique.

La plateforme-relais 32 est configurée pour servir de relais de transmission à un débit élevé des données spatiales d'observation ou télémesures, entre un ou plusieurs satellites d'observations défilants non géostationnaires, ici les satellites défilants d'observation 4 et 6, et au moins une station sol de destination et de réception desdites données, ici les stations sol de destination 12, 14, 16, la transmission ayant lieu dans une ou des fenêtres de visibilité prédéterminées du ou des satellites d'observation défilants 4, 6 vis-à-vis de l'aéronef 34.

La plateforme-relais de communication 32 comprend une première antenne de réception 102, une première interface de réception 104, une mémoire tampon 106, une deuxième interface d'émission 108, une deuxième antenne d'émission 110.

La première antenne de réception 102 est configurée pour recevoir dans une première bande optique ou radiofréquence des données d'observation, transmises sur une première liaison spatiale sans fil descendante 122 reliant au moins un satellite d'observation défilant à la plateforme-relais 32.

La première interface de réception 104, connectée à la première antenne de réception 102, est configurée pour démoduler les données de télémesures reçues par la première antenne 102 et les sauvegarder dans la mémoire 106.

La deuxième interface d'émission 108 est configurée pour moduler les données d'observation ou télémesures stockées dans la mémoire 106, et émettre dans une deuxième bande radiofréquence lesdites données de télémesures modulées via la deuxième d'antenne émission 110 sur une deuxième liaison aérienne sans fil descendante 128 « locale », reliant directement la plateforme-relais 32 à au moins une station sol de destination locale(s), ici les stations sol de destination locales 12, 14 et 16.

La première bande de fréquences de la première liaison spatiale sans fil 122 est une bande optique ou radiofréquence, et/ou la deuxième bande de fréquences de la deuxième liaison aérienne 128 est une bande radiofréquence.

Suivant la Figure 2, la plateforme-relais 32 comporte également une troisième interface de réception 142, configurée pour recevoir au travers d'une troisième antenne de réception 144 et pour démoduler des données de télécommandes sécurisées de la plateforme-relais 32, élaborées et transmises sur une troisième liaison dédiée 152 par le centre de contrôle terrestre 46 de la plateforme-relais 32.

Suivant la Figure 3 et un premier mode particulier 202 de réalisation de la plateforme-relais 32 intégrant les fonctions de sécurité, la plateforme-relais 202 comprend une première chaîne de décryptage/cryptage à double niveau descendant 204 des données d'observation ou télémesures, rapatriées depuis au moins un satellite défilant vers la ou les stations sol de destination, ici les satellites défiants 4 et 6.

La première chaîne de décryptage/encryptage à double niveau descendant 204 est configurée :
•- pour chaque satellite d'observation défilant 4, 6 et les données de télémesures reçues correspondantes, décrypter à un premier niveau descendant lesdites données de télémesures, cryptées et transmises par ledit satellite d'observation défilant sur la première liaison spatiale descendante 122 et démodulées par la première interface 104, en utilisant une clé active de décryptage des données de télémesures de premier niveau descendant, associée audit satellite défilant et à un indice de clé active d'encryptage/décryptage des données de télémesures de premier niveau descendant, ledit indice de clé active d'encryptage/décryptage étant transmis conjointement avec lesdites données de télémesures cryptées et étant associé de manière unique audit satellite défilant et à ladite clé active de décryptage; puis
•- pour chaque station sol de destination 12, 14, 16 et les données de télémesures correspondantes qui leur sont destinées, décryptées au premier niveau descendant et provenant d'un ou plusieurs satellites d'observation 4, 6, encrypter à un deuxième niveau descendant lesdites données de télémesures décryptées en utilisant une clé active d'encryptage des données de télémesures de deuxième niveau descendant, associée à ladite station sol de destination, et adjoindre auxdites données cryptées de deuxième niveau un indice de clé active d'encryptage/décryptage des données de télémesures de deuxième niveau descendant, associé de manière unique à ladite station sol de destination et à ladite clé active d'encryptage.

Il est à remarquer que des jeux de clés de décryptage et d'encryptage, respectivement des premier et deuxième niveaux descendants, et des jeux d'indices de clés de télémesures des premier et deuxième niveaux associés sont préalablement chargés dans le moyen de décryptage/cryptage à double niveau 204 au travers de la troisième interface de réception 142 de la troisième liaison 152 dédiée de télécommande sécurisée en provenance du premier centre de contrôle terrestre 46. L'activation des clés est mise en œuvre au sein de ces jeux de clés par télécommandes des indices des clés actives.

La première chaîne de décryptage/encryptage à double niveau descendant 204 des données de télémesures, rapatriées depuis le ou les satellite(s) défilant(s) 4, 6 vers la ou les station(s) sol de destination 12, 14, 16, comprend un premier module 212 de gestion des clés d'encryptage/décryptage du double niveau descendant, un deuxième module 214 de décryptage à un premier niveau descendant des données de télémesures, transmises sur la première liaison spatiale descendante 122 et démodulées par la première interface 104, et un troisième module 216 de cryptage à un deuxième niveau descendant des données de télémesures décryptées au premier niveau descendant.

Le premier module 212 de gestion des clés de cryptage/décryptage à double niveau descendant des données de télémesures est configuré pour :
•- recevoir initialement un premier ensemble d'un ou plusieurs jeux de clés de décryptage de télémesures de premier niveau descendant ; et
•- recevoir initialement un deuxième ensemble d'un ou plusieurs jeux de clés d'encryptage de données de télémesures de deuxième niveau descendant.

Chaque jeu de clés de décryptage de télémesures concernant le premier niveau descendant est associé à un satellite d'observation défilant, et chaque clé de décryptage de données de télémesures au premier niveau descendant de chaque jeu est appariée à et identifiée de manière unique par un indice de clé d'encryptage/décryptage au premier niveau descendant.

Chaque jeu de clés d'encryptage de données de télémesures concernant le deuxième niveau descendant est associé à une station sol de destination, et chaque clé de cryptage de données de télémesures au deuxième niveau descendant de chaque jeu est appariée à et identifiée de manière unique par un indice de clé d'encryptage/décryptage au deuxième niveau descendant.

Le premier module 212 de gestion des clés d'encryptage/décryptage à double niveau descendant des données de télémesures est configuré pour exécuter, sur réception via la troisième interface 142 de télécommandes dédiés, sécurisées et envoyées par le premier centre de contrôle terrestre 46, des modifications d'une partie ou de la totalité des clés de décryptage des données de télémesures au premier niveau descendant, et/ou des clés d'encryptage de données de télémesures au deuxième niveau descendant.

Suivant la Figure 3, la première antenne de réception 102, la première interface de réception 104, et la mémoire 106 sont configurées pour recevoir, démoduler et sauvegarder séparément des données d'observation ou télémesures, cryptées au premier niveau descendant et émises par un ou plusieurs satellites d'observation défilants non géostationnaires, ici les satellites d'observation 4, 6, sur la première liaison spatiale descendante 122.

La deuxième antenne d'émission 110 et la deuxième interface d'émission 108 sont configurées pour moduler et émettre les données de télémesures cryptées au deuxième niveau descendant vers la ou les stations sol de destination 12, 14, 16 sur la deuxième liaison aérienne sans fil descendante 128.

La première chaîne de décryptage/encryptage à double niveau descendant 204 des données de télémesures, rapatriées depuis le ou les satellite(s) défilant(s) 4, 6 vers la ou les station(s) sol de destination 12,14, 16 comprend ici un allocateur matriciel 224 des télémesures décryptées, reçues d'un même satellite d'observation défilant, à différentes stations sol de destination, suivant une table d'allocation 226 prédéterminée.

L'allocateur matriciel 224 est connecté en série entre le deuxième module de décryptage de premier niveau descendant 214 et le troisième module d'encryptage de deuxième niveau descendant 216.

La table d'allocation 226 est ici une matrice à deux lignes et cinq colonnes d'encodage d'une inter-connectivité prédéterminée, fixe ou modifiable par commande, entre les satellites d'observation et les stations sol destination, l'indice de ligne encodant le rang j du satellite d'observation et l'indice de colonne encodant le rang k de la station sol destination.

Suivant une première variante, une diffusion vers l'ensemble des stations sol de destination vers de toutes les données rapatriées depuis les satellites d'observation peut être mis en œuvre, un tri étant effectué au niveau des stations sol de destination dans ce cas.

Suivant une deuxième variante, une consigne d'allocation des données de télémesures, par exemple des images, à telle ou telle station sol de réception, est fournie en étant contenue dans les méta-datas associées aux images et donc reçues avec lesdites images par la plateforme relais. Cela permet une allocation image par image plutôt que satellite par satellite.

Les deuxième et troisième modules 214, 216 sont reliés au premier module 212 via des liaisons bidirectionnelles et sont configurés pour aller y rechercher respectivement la clé active de décryptage de premier niveau descendant et la clé active d'encryptage de deuxième niveau descendant en fonction des deux indices de clés actives d'encryptage/décryptage correspondants reçus au préalable par télécommande.

Plusieurs modes de gestion de la mémoire 106 sont possibles.

Suivant un premier mode préféré de gestion de la mémoire 106, les données cryptées, rapatriées depuis les satellites d'observation 4, 6, sont stockées cryptées dans la mémoire 106, puis décryptées et cryptées avant envoi vers les stations sol de destination 12, 14, 16.

Suivant un deuxième mode de gestion de la mémoire 106, les données cryptées, rapatriées depuis les satellites d'observation 4, 6, sont d'abord décryptées, puis stockées décryptées dans la mémoire 106, et ensuite cryptées avant envoi vers les stations sol de destination 12, 14, 16.

Suivant un troisième mode de gestion de la mémoire 106, les données cryptées, rapatriées depuis les satellites d'observation 4, 6, sont successivement décryptées et stockées décryptées dans la mémoire 106, puis successivement cryptées au deuxième niveau descendant et stockées cryptées dans la mémoire 106 avant envoi vers les stations sol de destination 12, 14, 16.

Suivant la Figure 4 et une deuxième forme particulière 252 de réalisation de la plateforme-relais 32, la plateforme-relais 252 est dérivée de la première forme de réalisation 202 de la plateforme-relais et comporte les mêmes composants numérotés de manière identique, en particulier la première chaîne de décryptage/cryptage à double niveau descendant 204 des données de télémesures, rapatriées depuis au moins un satellite défilant vers la ou les stations sol de destination, ici les satellites défiants 4 et 6.

La plateforme-relais de communications 252 comprend en outre une deuxième chaîne de décryptage/encryptage à double niveau montant 254 des données de télécommandes du ou des satellite(s) défilant(s) d'observation, ici les satellites d'observation 4, 6, reçues via la troisième interface de réception 142 de la quatrième liaison dédiée de télécommande sécurisée 152 en provenance du premier centre de contrôle terrestre 46.

La deuxième chaîne de décryptage/encryptage à double niveau montant 254 des données de télécommandes du ou des satellite(s) défilant(s) d'observation, est configurée :
•- pour chaque satellite d'observation défilant de destination 4, 6, et les données de télécommandes dudit satellite correspondantes, décrypter à un premier niveau montant les données de télécommandes, transmises par le premier centre de contrôle terrestre 46 sur la troisième liaison 152 et démodulées par la troisième interface 142, en utilisant une clé active de décryptage des données de télécommandes de premier niveau montant, associée audit satellite d'observation et à un indice de clé active d'encryptage/décryptage de données de télécommandes de premier niveau montant, ledit indice de clé active d'encryptage/décryptage des données de télécommandes étant transmis conjointement avec les données de télécommandes encryptées par le premier centre de contrôle terrestre 46 et étant associé de manière unique au satellite défilant et à ladite clé active de décryptage ; puis
•- pour chaque satellite d'observation défilant de destination 4, 6, et les données de télécommandes décryptées qui lui sont destinées, encrypter à un deuxième niveau montant les données de télécommandes décryptées au premier niveau montant en utilisant une clé active d'encryptage des données de télécommandes de deuxième niveau montant, la clé d'encryptage des données de télécommande de deuxième niveau montant étant associée au satellite d'observation de destination, et adjoindre auxdites données encryptées de télécommandes de deuxième niveau montant, un indice de clé active de décryptage des données de télécommandes, associé de manière unique audit satellite d'observation et à ladite clé active d'encryptage de deuxième niveau montant.

Il est à remarquer que des jeux de clés de décryptage et d'encryptage, respectivement des premier et deuxième niveaux montants sont préalablement chargés dans le moyen de décryptage/encryptage à double niveau montant 254 au travers de la troisième interface de réception 142 de la troisième liaison 152 dédiée de télécommande sécurisée en provenance du premier centre de contrôle terrestre 46. L'activation des clés est mise en œuvre via les indices de clés contenues dans des télécommandes.

Suivant la Figure 4, la plateforme-relais de communications 252 comprend également une quatrième interface d'émission 256, configurée pour moduler des données de télécommandes d'au moins un satellite d'observation défilant(s), et émettre lesdites données modulées de télécommandes via une quatrième antenne d'émission 258 sur une quatrième liaison spatiale sans fil montante 260 reliant directement la plateforme-relais 252 au(x) satellite(s) d'observation défilants 4 et 6.

La deuxième chaîne de décryptage/encryptage à double niveau montant 254 des données de télécommandes du ou des satellite(s) défilant(s) d'observation 4, 6 comprend un quatrième module 262 de gestion des clés d'encryptage/décryptage du double niveau montant, un cinquième module 264 de décryptage à un premier niveau montant des données de télécommandes, transmises sur la troisième liaison 152 et démodulées par la troisième interface 142, et un sixième module 266 de cryptage à un deuxième niveau montant des données de télécommandes décryptées au premier niveau montant.

Le quatrième module 262 de gestion des clés d'encryptage/décryptage à double niveau montant des télécommandes du ou des satellite(s) défilant(s) est configuré pour :
•- recevoir initialement un troisième ensemble d'un ou plusieurs jeux de clés de décryptage de télécommandes de premier niveau montant, et
•- recevoir initialement un quatrième ensemble d'un ou plusieurs jeux de clés d'encryptage de télécommandes de deuxième niveau montant.

De manière préférée, le troisième ensemble contient un jeu unique de clés de décryptage de télécommandes de premier niveau montant de sorte que le cryptage de la troisième liaison 152 sol-plateforme relais soit indépendant des satellites d'observation et que ce soit au niveau de la plateforme-relais que soit particularisé le cryptage par satellite. Ainsi, la sécurisation de la première liaison montante est plus simple à mettre en œuvre et rendue plus robuste.

En variante, le troisième ensemble contient plusieurs jeux de clés de décryptage de télécommandes de premier niveau montant. Dans ce cas, chaque jeu de clés de décryptage de télécommandes concernant le premier niveau montant est de préférence est associé à un satellite d'observation défilant de destination, et chaque clé de décryptage de données de télécommandes au premier niveau montant de chaque jeu est appariée à et identifiée de manière unique par un indice de clé d'encryptage/décryptage des données de télécommandes au premier niveau montant.

Chaque jeu de clés d'encryptage de télécommandes concernant le deuxième niveau montant est associé à un satellite d'observation défilant de destination, et chaque clé d'encryptage de donnés de télécommandes au deuxième niveau montant de chaque jeu est appariée à et identifié de manière unique par un indice de clé d'encryptage/décryptage au deuxième niveau montant.

Le quatrième module 262 de gestion des clés d'encryptage/décryptage à double niveau montant des données de télécommandes du ou des satellite(s) défilant(s) est configuré pour exécuter, sur réception via la troisième interface 152 de télécommandes dédiés, sécurisées et envoyées par le premier centre de contrôle terrestre 46, des modifications d'une partie ou de la totalité des clés de déchiffrage des données de télécommandes au premier niveau montant et/ou des clés d'encryptage de données de télécommandes au deuxième niveau montant.

Les cinquième et sixième modules 264, 266 sont reliés au quatrième module 262 via des liaisons bidirectionnelles et sont configurés pour aller y rechercher respectivement la clé active de décryptage de premier niveau montant et la clé active d'encryptage de deuxième niveau montant en fonction des deux indices de clés actives d'encryptage/décryptage correspondants reçus au préalable par télécommande.

Plusieurs modes de gestion de la mémoire 106 sont possibles.

Suivant un premier mode préféré de gestion de la mémoire 106, les données cryptées, rapatriées depuis les satellites d'observation 4, 6, sont stockées cryptées dans la mémoire 106, puis décryptées et cryptées avant envoi vers les stations sol de destination 12, 14, 16.

Suivant un deuxième mode de gestion de la mémoire 106, les données cryptées, rapatriées depuis les satellites d'observation 4, 6, sont d'abord décryptées, puis stockées décryptées dans la mémoire 106, et ensuite cryptées avant envoi vers les stations sol de destination 12, 14, 16.

Suivant un troisième mode de gestion de la mémoire 106, les données cryptées, rapatriées depuis les satellites d'observation 4, 6, sont successivement décryptées et stockées décryptées dans la mémoire 106, puis successivement cryptées au deuxième niveau descendant et stockées cryptées dans la mémoire 106 avant envoi vers les stations sol de destination 12, 14, 16.

Dans tous les cas, les données de télécommandes, décryptées au premier niveau montant d'un ou plusieurs satellite défilants contiennent les indices associés au(x) clé(s) de cryptage des données de télémesures de premier niveau descendant et les indices associés aux clés de cryptage/décryptage de deuxième niveau montant.

Uniquement en cas de mise à jour des clés, les données de télécommandes, décryptées au premier niveau montant associées à un satellite d'observation défilant, contiennent les clés de cryptage des données de télémesures de la première liaison spatiale descendante, ainsi que les clés de décryptage des données de télécommandes de la quatrième liaison spatiale montante.

En variante et de manière particulière, une troisième forme de réalisation de la plateforme-relais est dérivée de la première forme de réalisation 302. Cette troisième forme de réalisation de plateforme-relais comporte la première chaîne de décryptage/encryptage à double niveau descendant 204 des données de télémesures décrite dans la Figure 3 mais est dépourvue de deuxième chaine décryptage/encryptage à double niveau montant des données de télécommandes des satellites d'observation défilants.

Ainsi, l'utilisation d'une plateforme-relais de communications, embarquée à bord d'un aéronef, compris parmi les drones, les ballons dirigeables stratosphériques et les aéroplanes est à même d'apporter une solution spécifique à la sécurisation des données d'observation, via l'emport de fonctions de routage et de gestion du cryptage/décryptage des données, utilisées par les différents satellites d'observation défilants et les stations sol de destination, via la prise en compte de la gestion des clés d'encryptage et/ou décryptage et des fonctions de décryptage/encryptage à bord de la plateforme-relais

Ainsi, les fonctions de sécurité intégrées au niveau d'une plateforme-relais de communication permettent de simplifier la gestion de la sécurité des transmissions dans le cas de l'utilisation de constellations de satellites multiples et/ou de stations sol de destination multiples.

Les fonctions de sécurité concernant la gestion de clés, le décryptage/cryptage des données de télémesures des satellites défilants et des télécommandes le cas échéant des satellites défilants permettent :
•- la simplification de la gestion des clés satellite, le report de la complexité de gestion des satellites défilant vers l'aéronef, et de gestion des liaisons satellites / sol vers les liaisons du segment de contrôle sol-drone ;
•- la gestion depuis la plateforme-relais de la sécurité de plusieurs satellites d'observation défilants,
•- la gestion à bord de la plateforme-relais de la distribution des données d'un même satellite, descendues chiffrées avec une clé unique, vers plusieurs utilisateurs ayant des clés distinctes.

Suivant la Figure 5 et une architecture 302 de communications du système d'observation 2 de la Figure 1, le système de communication 302 du système d'observation utilise une plateforme-relais 252 selon le deuxième mode de réalisation de la Figure 4 qui intègre à un degré élevé les fonctions de sécurisation des données de télémesures et de télécommandes des satellites d'observation 4, 6.

Dans cette architecture, la redescente de télémesures sécurisées des satellites d'observation vers les stations de destination locales 12, 14, 16 a lieu au travers de liaisons à double niveaux combinant au choix une liaison descendante de télémesures de premier niveau 122-1 ou 122-2 et une liaison descendante de télémesures de deuxième niveau prise parmi les liaisons 110-1, 110-2, et 110-3.

Dans cette architecture, la montée de télécommandes sécurisées des satellites d'observation, depuis le premier centre de contrôle terrestre 46 vers les satellites d'observation 4, 6 a lieu via la plateforme-relais 252 au travers de liaisons à double niveaux combinant au choix la première liaison montante 152 de premier niveau et une liaison 260-1 ou 260-2 de la double liaison montante de télécommandes de deuxième niveau.

Suivant la Figure 6 et une variante 312 du système d'observation spatial 2 de la Figure 1, le système d'observation spatial 312 comporte les mêmes éléments que ceux du système d'observation spatial et comporte en supplément :
•- au moins une station sol « distante ou déportée », 318, 320 de destination et de réception de données d'observation, émises à un débit élevé par l'au moins un satellite d'observation 4, 6,
•- un satellite géostationnaire 342 de communications, servant de relais de retransmission des données d'observation entre l'au moins un satellite(s) d'observation défilant(s) 4, 6 et l'au moins une station(s) sol de destination et de réception « distante(s) et déportée(s) » 318, 320.

Les stations sol de destination, distantes et déportées 318, 320, sont non visibles optiquement depuis la plateforme-relais 332 en raison de leur éloignement des stations sol locales de destination 12, 14, 16, de l'altitude de survol de l'aéronef et de la rotondité de la Terre, mais sont visibles optiquement et radio-électriquement depuis le satellite géostationnaire 342. Ces stations sol de destination 318, 320, dénommées « distantes ou déportées », et accessibles directement depuis le satellite géostationnaire 342, forment un deuxième groupe « distant » de stations sol de destination, distantes ou déportées.

Les stations sol de destination 318, 320 englobent les mêmes fonctions que les stations sol de destination locales 12, 14, 16, notamment le décryptage avec des clés et indices associés qui leur sont spécifiques.

Il est à remarquer que par ailleurs, la gestion de sécurité, c'est-à-dire le chargement des clés et la transmission des indices de clés actives, est identique pour toutes les stations 12, 14, 18, 318, 320.

Parmi les stations sol de destination distantes et déportées 318, 320, au moins une station sol de destination déportée, par exemple la station sol 320, peut faire fonction de station sol de déroutage, configurée pour recevoir des données de télémesures destinée à une station sol de destination locale lorsque la liaison locale correspondante est indisponible, et pour retransmettre lesdites données de télémesures vers un destinataire souhaité.

Le système spatial d'observation 312 diffère du système d'observation spatial 2 en ce que la plateforme-relais 32 est remplacé par une plateforme-relais 332 ayant les mêmes fonctions que ladite plateforme 32 et des fonctions supplémentaires.

Suivant la Figure 7, la plateforme-relais 332 est configurée pour servir de premier relais de transmission à un débit élevé des données spatiales d'observation ou télémesures, entre un ou plusieurs satellites d'observations défilants non géostationnaires, ici les satellites défilants d'observation 4 et 6, et au moins une station sol de destination et de réception desdites données, ici les stations sol de destination 12, 14, 16, 318, 320, la transmission ayant lieu dans une ou des fenêtres de visibilité prédéterminées du ou des satellites d'observation défilants 4, 6 vis-à-vis de l'aéronef 34.

La plateforme-relais 332 comprend une cinquième interface d'émission 362 et une cinquième antenne d'émission 364.

La cinquième interface d'émission 362 est configurée pour moduler les données d'observations ou de télémesures stockées dans la mémoire 106, et émettre, dans une cinquième bande optique ou radiofréquence, lesdites données de télémesures modulées, via la cinquième antenne d'émission 364 sur une cinquième liaison spatiale sans fil montante 372 « de déport », reliant directement la plateforme-relais 332 au satellite géostationnaire 342, ledit satellite géostationnaire 342 formant un deuxième relais de communication vis-à-vis des données de télémesures des satellites d'observation 4, 6.

La plateforme-relais de communication 332 est configurée pour recevoir une commande d'aiguillage 376 des données cryptées avant envoi au sol, la commande étant élaborée et transmise par la première station de contrôle 46.

Dans un mode nominal suivant lequel la transmission sur la deuxième liaison de descente locale 128 permet le passage d'un débit suffisant, la deuxième interface 108 est activée et les données de télémesures d'observation son aiguillées par la mémoire 106 vers ladite deuxième interface 108 et les stations de réception locale.

Dans un mode de régulation ou de secours suivant lequel la transmission sur la deuxième liaison de descente locale 128 ne permet pas le passage d'un débit suffisant, après envoi par la première station de contrôle 46 et réception par la plateforme-relais 332 d'une commande d'aiguillage 376 de mode secours, la cinquième interface 262 est activée et les données de télémesures d'observation son aiguillées par la mémoire 106 vers ladite cinquième interface 362 et les stations de réception distantes et déportées 318, 320. Le passage du mode secours au mode nominal est mis en oeuvre par l'envoi par la première station de contrôle 46 et la réception par la plateforme-relais 332 d'une commande d'aiguillage 376 de mode nominal.

Suivant la Figure 8 et une première architecture de communications 402 du système d'observation 312 de la Figure 6, le système de communication 402 du système d'observation 312 utilise une version 332-1 de la plateforme-relais 332 qui intègre à un degré élevé les fonctions de sécurisation des données de télémesures et de télécommandes des satellites d'observation 4, 6 à l'instar de plateforme relais 252 de la Figure 4.

Dans cette architecture, la redescente de télémesures sécurisées des satellites d'observation vers les stations de destination locales 12, 14, 16 a lieu nominalement, en dessous de la plateforme-relais 332-1 au travers de liaisons à double niveaux combinant au choix une liaison descendante de télémesures de premier niveau 122-1 ou 122-2 et une liaison descendante de télémesures de deuxième niveau prise parmi les liaisons 110-1, 110-2, et 110-3.

En mode de secours, la redescente des télémesures cryptées depuis, par exemple le satellite d'observation défilant 6, vers la station sol de destination locale 12 a lieu au travers de la succession des liaisons cryptées 122-2, 132, d'une liaison 404 entre le satellite géostationnaire 342 et la station sol déportée de déroutage 20, d'une première liaison de rapatriement 406 entre la station sol déportée de déroutage 20 et le centre de contrôle terrestre 46, et d'une deuxième liaison de rapatriement 408-2 entre le centre de contrôle terrestre 46 et la station sol de destination 12, le cryptage de deuxième niveau des télémesures étant rapporté de manière transparente au niveau de la station sol de destination locale 12.

Il est à remarquer que le mode de secours via le satellite géostationnaire est applicable pour des stations sol hors visibilité de plateforme-relais comme les stations sol 318, 320, mais peut également être appliqué à toute station en visibilité du satellite sans que ce choix soit contraint par des conditions d'environnement.

En mode nominal, la redescente de télémesures sécurisées des satellites d'observation vers les stations de destination déportées 318, 320, a lieu au travers de liaison à double niveau de cryptage combinant au choix une liaison descendante de télémesures de premier niveau 122-1 ou 122-2 et une liaison descendante de télémesures cryptée au deuxième niveau prise parmi une première liaison composée incluant les liaisons 132 et 404 et une deuxième liaison 414 composée incluant la liaison 132 et une deuxième liaison entre le satellite géostationnaire 42 et la station sol de destination distante 18.

Dans cette architecture, la montée de télécommandes sécurisées des satellites d'observation, depuis le centre de contrôle terrestre 46 vers les satellites d'observation 4, 6 a lieu via la plateforme-relais 332-1 au travers de liaisons à double niveaux combinant au choix la première liaison montante 152 de premier niveau et une liaison 260-1 ou 260-2 de la double liaison montante de télécommandes de deuxième niveau.

Suivant la Figure 9 et une deuxième architecture 432 de communications du système d'observation 312 de la Figure 6, le système de communication 432 utilise une version 332-2 de la plateforme-relais 332 qui intègre seulement la sécurisation des télémesures des satellites d'observation défilants à l'instar de la plateforme-relais 202 de la Figure 3 et sert seulement de relais transparent vis-à-vis de la sécurisation des données de télécommandes des satellites d'observation 4 et 6.

La deuxième architecture 432 de communications comporte les mêmes éléments de liaisons et de protection des données de télémesures que ceux de la première architecture 402 de communications.

La deuxième architecture 432 de communications diffère de la première architecture 402 de communications en ce que la montée de télécommandes sécurisées des satellites d'observation, depuis le centre de contrôle terrestre 46 vers les satellites d'observation 4, 6 a lieu, d'abord via le satellite géostationnaire au travers d'une liaison montante 452 entre le centre de contrôle terrestre 46 et le satellite géostationnaire 342 et d'une liaison descendante 454 entre le satellite géostationnaire 454 et la plateforme-relais 332-2, puis via la plateforme-relais 332-2 et au travers de la liaison montante 260-1 ou la liaison montante 260-2 en destination du satellite d'observation correspondant 4 ou 6.

Les données de télécommandes des satellites d'observation sont cryptées au niveau du premier centre de contrôle terrestre 46 et ce cryptage des données est rapporté de manière transparente via le satellite géostationnaire 342 et la plateforme-relais 332-2 au niveau des satellites d'observation 4 et 6.

Suivant la Figure 10 et une troisième architecture 462 de communications du système d'observation 312 de la Figure 6, le système de communications 462 utilise une version 332-3 de la plateforme-relais 332 qui intègre seulement la sécurisation des télémesures des satellites d'observation défilants, à l'instar de la plateforme-relais 202 de la Figure 3, et qui ne participe pas à la transmission des données de télécommandes depuis le premier centre de contrôle terrestre 46 ou depuis le deuxième centre de contrôle satellite 48 vers les satellites d'observation défilants 4, 6.

La troisième architecture 462 de communications diffère des première et deuxième architectures 402, 432 de communications en ce que la montée de télécommandes sécurisées des satellites d'observation 4, 6, depuis le premier centre de contrôle terrestre 46 ou depuis le deuxième centre de contrôle satellite 48 vers les satellites d'observation 4, 6 a lieu directement, via une liaison montante spatiale de télécommandes dédiée 4801 ou 480-2, entre le centre de contrôle terrestre 46 et le satellite d'observation correspondant 4 ou 6.

De manière générale la mise en oeuvre d'un procédé de protection des données de télémesures d'observation et des télécommandes des satellites d'observation par le système d'observation de la Figue 1 utilisant la plateforme de la Figure 6 comprend une étape de chargement des jeux de clés d'encryptage/décryptage exécutée lors d'une phase d'initialisation des clés ou de renouvellement des clés, et une étape de transmission des indices des clés actives.

Le double niveau de cryptage, entre les satellites d'observation et la plateforme-relais d'une part, et entre la plateforme-relais et les stations sol de destination permet de mettre en œuvre au choix :
•- un panachage ou redistribution des données de télémesures entre les satellites d'observation et les stations sol de destination, toutes les combinaisons étant a priori possibles, chaque liaison individuelle étant spécifiquement cryptée.
•- une gestion à bord de la plateforme de l'allocation des données montantes (plans de mission) vers les différents satellites d'observation, ce qui a pour effet de diminuer la complexité des transmissions sol-plateforme-relais et de leur sécurisation
•une gestion à bord de la plateforme-relais de l'allocation des données de télémesures descendantes depuis les satellites d'observation vers les différents terminaux de réception au sol, via une allocation matricielle de ces données, tout ou partie des données d'un satellite j pouvant être transmise vers une station sol de destination k. Ceci permet une modularité totale de diffusion des données de télémesures, combinée à la sécurisation de cette diffusion.

## Revendications

1. Plateforme-relais de communications d'un système spatial d'observation, configurée pour être embarquée à bord d'un aéronef (34) évoluant au-dessus des nuages, et configurée pour servir de relais haute altitude de transmission à un débit élevé de données spatiales d'observation, dénommées télémesures, entre au moins un satellite d'observation (4,6) défilant non géostationnaire et au moins une station sol de destination (12, 14, 16) et de réception desdites données, la transmission depuis le ou les satellites d'observation vers le relais haute altitude pouvant avoir lieu dans une ou des fenêtres de visibilité prédéterminées du ou des satellites d'observation (4, 6) défilant vis-à-vis de l'aéronef (34), et la transmission de données de l'aéronef vers le sol pouvant avoir lieu de façon permanente,
la plateforme-relais comprenant
une première antenne de réception (102), configurée pour recevoir dans une première bande optique ou radiofréquence des données d'observation, transmises sur une première liaison spatiale sans fil descendante (122), reliant au moins un satellite d'observation défilant à la plateforme-relai, et
une première interface de réception (104), connectée à la première antenne de réception (102) et configurée pour démoduler les données reçues par la première antenne et les sauvegarder dans une mémoire (106), et
une deuxième interface d'émission (108), configurée pour moduler les données d'observation stockées dans la mémoire (106), et émettre dans une deuxième bande radiofréquence lesdites données modulées via une deuxième d'antenne émission (110) sur une deuxième liaison aérienne sans fil descendante (128) reliant directement la plateforme-relais à au moins une station sol de destination (12, 14, 16), et
la plateforme-relais étant **caractérisée en ce qu'**elle comprend
une première chaîne de décryptage/cryptage à double niveau descendant (204) des données de télémesures rapatriées depuis au moins un satellite d'observation défilant(s) (4, 6) vers la ou les stations sol de destination (12, 14, 16).

2. Plateforme-relais de communications selon la revendication 1, dans laquelle
la première bande de fréquences de la première liaison spatiale sans fil descendante (122) est une bande optique ou radiofréquence, et/ou
La deuxième bande de fréquences de la deuxième liaison aérienne descendante (128) est une bande optique ou radiofréquence.

3. Plateforme-relais de communications selon l'une quelconque des revendications 1 à 2, comprenant en outre
une troisième interface de réception(142), configurée pour démoduler des données de télécommandes sécurisées de la plateforme-relais et/ou du ou des satellite(s) défilant(s) d'observation, élaborées et transmises sur une troisième liaison (152) dédiée par un centre de contrôle terrestre (46) du système spatial d'observation.

4. Plateforme-relais de communications selon l'une quelconque des revendications 1 à 3, dans lequel
la première chaîne de décryptage/encryptage à double niveau descendant (204) est configurée :
•- pour chaque satellite d'observation défilant (4, 6) et les données de télémesures reçues correspondantes, décrypter à un premier niveau descendant lesdites données de télémesures, cryptées et transmises par ledit satellite d'observation défilant sur la première liaison spatiale descendante (122) et démodulées par la première interface (104), en utilisant des clés actives de décryptage des données des données de télémesures de premier niveau descendant, associée audit satellite défilant et à des indices de clés actives d'encryptage/décryptage des données de télémesures de premier niveau descendant, lesdits indices de clés actives d'encryptage/décryptage étant transmis conjointement avec lesdites données de télémesures cryptées et étant associées de manière unique audit satellite d'observation défilant et auxdites clés actives de décryptage de premier niveau descendant ; puis
•- pour chaque station sol de destination (12, 14, 16) et les données correspondantes qui leur sont destinées de télémesures, décryptées au premier niveau descendant et provenant d'un ou plusieurs satellites d'observation (4, 6), encrypter à un deuxième niveau descendant les données de télémesures décryptées au premier niveau descendant en utilisant une clé active d'encryptage des données de télémesures de deuxième niveau descendant, associée à ladite station sol de destination, et adjoindre auxdites données cryptées de deuxième niveau descendant un indice de clé active d'encryptage/décryptage des données de télémesures de deuxième niveau descendant, associé de manière unique à ladite station sol de destination et à ladite clé active d'encryptage de deuxième niveau descendant.

5. Plateforme-relais de communications selon la revendication 4, dans laquelle
la première chaîne de décryptage/encryptage à double niveau descendant (204) des données de télémesures, rapatriées depuis le ou les satellite(s) défilant(s) (4, 6) vers la ou les station(s) sol de destination, comprend un premier module (212) de gestion des clés d'encryptage/décryptage du double niveau descendant, un deuxième module (214) de décryptage à un premier niveau descendant des données de télémesures, transmises sur la première liaison spatiale descendante (122) et démodulées par la première interface (104), et un troisième module (216) de cryptage à un deuxième niveau descendant des données de télémesure décryptées au premier niveau descendant ; et
le premier module (212) de gestion des clés d'encryptage/décryptage à double niveau descendant des données de télémesures est configuré pour
•- recevoir initialement un premier ensemble d'un ou plusieurs jeux de clés de décryptage de télémesures de premier niveau descendant ; et
•- recevoir initialement un deuxième ensemble d'un ou plusieurs jeux de clés d'encryptage de données de télémesures de deuxième niveau descendant ; et
chaque jeu de clés de décryptage de télémesures concernant le premier niveau descendant est associé à un satellite d'observation défilant, et chaque clé de décryptage de données de télémesures au premier niveau descendant de chaque jeu est appariée à et identifiée de manière unique par un indice de clé d'encryptage/décryptage de premier niveau descendant ; et
chaque jeu de clés de cryptage de données de télémesures concernant le deuxième niveau descendant est associé à une station sol de destination, et chaque clé de cryptage de données de télémesures au deuxième niveau descendant de chaque jeu est appariée à et identifiée de manière unique par un indice de clé de d'encryptage/décryptage au deuxième niveau descendant.

6. Plateforme-relais de communications selon la revendication 5, dans laquelle
le premier module (212) de gestion des clés d'encryptage/décryptage à double niveau descendant des données de télémesures est configuré pour exécuter, sur réception via la troisième interface de télécommandes dédiés, sécurisées et envoyées par le centre de contrôle terrestre, des modifications d'une partie ou de la totalité des clés de décryptage des données de télémesures au premier niveau descendant et/ou des clés de cryptage de données de télémesures au deuxième niveau descendant.

7. Plateforme-relais de communications selon l'une quelconque des revendications 4 à 6, dans laquelle
la première antenne de réception (102), la première interface de réception (104), et la mémoire (106) sont configurées pour recevoir, démoduler et sauvegarder séparément des données de télémesures, cryptées au premier niveau descendant et émises par au moins deux satellites d'observation défilants non géostationnaires sur la première liaison spatiale descendante (122), et/ou
la deuxième antenne d'émission (110), la deuxième interface d'émission (108), sont configurés pour moduler et émettre séparément les données de télémesures cryptées au deuxième niveau descendant vers au moins une stations sol de destination sur la deuxième liaison aérienne sans fil descendante (128); et
la première chaîne de décryptage/encryptage à double niveau descendant (204) des données de télémesures, rapatriées depuis le ou les satellite(s) défilant(s) (4, 6) vers la ou les station(s) sol de destination (12, 14, 16), comprend un allocateur matriciel (224) des télémesures décryptées, reçues d'un même satellite d'observation défilant, à différentes stations sol de destination, suivant une table d'allocation (226) chargée par télécommandes,
l'allocateur matriciel (224) étant connecté en série entre le deuxième module de décryptage (214) et le troisième module d'encryptage (216).

8. Plateforme-relais de communications selon l'une quelconque des revendications 1 à 7, comprenant en outre
une deuxième chaîne de décryptage/encryptage à double niveau montant (254) des données de télécommandes du ou des satellite(s) défilant(s) d'observation reçues via la troisième interface de réception (142) de la troisième liaison dédiée de télécommandes sécurisées (152) en provenance du centre de contrôle terrestre (46).

9. Plateforme-relais de communications selon la revendication 8, dans laquelle
la deuxième chaîne de décryptage/encryptage à double niveau montant (254) des données de télécommandes du ou des satellite(s) d'observation défilant(s) (4, 6) est configurée :
•- pour chaque satellite d'observation défilant de destination (4, 6) et les données de télécommandes dudit satellite correspondantes, décrypter à un premier niveau montant les données de télécommandes, transmises par le centre de contrôle terrestre (46) sur la troisième liaison (152) et démodulées par la troisième interface (142), en utilisant une clé active de décryptage des données de télécommandes de premier niveau montant, associée audit satellite d'observation et à un indice de clé active d'encryptage/décryptage des données de télécommande de premier niveau montant, ledit indice de clé active d'encryptage/décryptage des données de télécommandes étant transmis conjointement avec les données de télécommandes cryptées par le centre de contrôle terrestre (46) et étant associé de manière unique au satellite défilant et à ladite clé de décryptage de premier niveau montant ; puis
•- pour chaque satellite d'observation défilant de destination (4, 6) et les données de télécommandes décryptées qui lui sont destinées, encrypter à un deuxième niveau montant les données de télécommandes décryptées au premier niveau montant en utilisant une clé active de d'encryptage des données de télécommandes de deuxième niveau montant, la clé active d'encryptage des données de télécommandes de deuxième niveau montant étant associée au satellite d'observation de destination, et adjoindre auxdites données de télécommandes de deuxième niveau montant, un indice de clé active d'encryptage/décryptage de télécommandes, associé de manière unique audit satellite d'observation et à ladite clé active d'encryptage de deuxième niveau montant.

10. Plateforme-relais de communications selon la revendication 9, comprenant en outre
une quatrième interface d'émission (256), configurée pour moduler des données de télécommandes d'au moins un satellite d'observation défilant (4, 6), et émettre lesdites données modulées de télécommandes via une quatrième antenne d'émission (258) sur une quatrième liaison spatiale sans fil montante (260) reliant directement la plateforme-relais au(x) satellite(s) d'observation défilants (4, 6);
et dans laquelle la deuxième chaîne de décryptage/encryptage à double niveau montant (254) des données de télécommandes du ou des satellite(s) défilant(s) d'observation comprend un quatrième module (262) de gestion des clés d'encryptage/décryptage du double niveau montant, un cinquième module (264) de décryptage à un premier niveau montant des données de télécommandes, transmises sur la troisième liaison (152) et démodulées par la troisième interface (142), et un sixième module (266) de cryptage à un deuxième niveau montant des données de télécommandes décryptées au premier niveau montant ; et
le quatrième module (262) de gestion des clés d'encryptage/décryptage à double niveau montant des télécommandes du ou des satellite(s) défilant(s) est configuré en outre pour
•- recevoir initialement un troisième ensemble d'un ou plusieurs jeux de clés de déchiffrage de télécommandes de premier niveau montant,
•- recevoir initialement un quatrième ensemble d'un ou plusieurs jeux de clés d'encryptage de télécommandes de deuxième niveau montant; et
chaque jeu de clés de décryptage de télécommandes concernant le premier niveau montant est associé à un satellite d'observation défilant, et chaque clé de décryptage de données de télécommandes au premier niveau montant de chaque jeu est appariée à et identifiée de manière unique par un indice de clé d'encryptage/décryptage des données de télécommandes au premier niveau montant ; et
chaque jeu de clés d'encryptage de télécommandes concernant le deuxième niveau montant est associé à un satellite d'observation défilant de destination, chaque clé d'encryptage de données de télécommandes au deuxième niveau montant de chaque jeu est appariée à et identifiée de manière unique par un indice de clé d'encryptage/décryptage au deuxième niveau montant.

11. Plateforme-relais de communications selon la revendication 10, dans laquelle
le quatrième module (262) de gestion des clés d'encryptage/décryptage à double niveau des données de télécommandes du ou des satellite(s) défilant(s) est configuré pour exécuter, sur réception via la troisième interface (142) de télécommandes dédiés, sécurisées et envoyées par le centre de contrôle terrestre (46), des modifications d'une partie ou de la totalité des clés de décryptage des données de télécommandes au premier niveau montant et/ou des clés de cryptage de données de télécommandes au deuxième niveau montant.

12. Plateforme-relais de communications selon l'une quelconque des revendications 1 à 11, comprenant en outre
une cinquième interface d'émission (362), configurée pour moduler les données d'observations stockées dans la mémoire (106), et émettre dans une cinquième bande optique ou radiofréquence lesdites données modulées via une cinquième antenne d'émission (364) sur une cinquième liaison spatiale sans fil montante (372) reliant directement la plateforme-relais à un satellite géostationnaire (342),
la mémoire (106) étant configurée pour router, de manière pilotée depuis le sol par l'envoi d'une commande (376) dédiée, les données de télémesures sur la cinquième interface d'émission (362), au lieu de la deuxième interface d'émission (108) prise comme port de destination dans un mode nominal.

13. Système spatial comprenant au moins un satellite(s) d'observation (4, 6) défilant(s) non géostationnaire(s) (4, 6), au moins une station(s) sol de destination (12, 14, 16) et de réception de données d'observation émises à un débit élevé par l'au moins un satellite d'observation (4, 6), un aéronef (34) évoluant à une altitude élevée dépassant celle des nuages, et une plateforme-relais (32) de communications, embarquée à bord de l'aéronef (34) et servant de relais de transmission des données d'observation ou télémesures entre l'au moins un satellite d'observation (4, 6) et les au moins deux stations sol de destination (12, 14, 16) et de réception des données, dans lequel
la plateforme-relais (32 ; 332) de communications est définie selon l'une quelconque des revendications 1 à 12, et
l'aéronef (34) est compris dans l'ensemble formé par les drones, les ballons dirigeables stratosphériques ou aéroplanes.

14. Système spatial selon la revendication 13, comprenant en outre un satellite géostationnaire (342) et au moins une station sol distante et de déport (320), connectée audit satellite géostationnaire (342) par une liaison spatiale géostationnaire descendante, et dans lequel
la plateforme-relais (332) comporte une cinquième interface d'émission (362), configurée pour moduler les données d'observations stockées dans la mémoire (106), et émettre dans une cinquième bande optique ou radiofréquence lesdites données modulées via une cinquième antenne d'émission (364) sur une cinquième liaison spatiale sans fil montante (372) reliant directement la plateforme-relais à un satellite géostationnaire (342),
la mémoire (106) étant configurée pour router, de manière pilotée depuis le sol par l'envoi d'une commande (376) dédiée, les données de télémesures sur la cinquième interface d'émission (362) au lieu de la deuxième interface d'émission (108) prise comme port de destination dans un mode nominal.

## Patentansprüche

1. Kommunikationsrelais-Plattform eines Weltraumbeobachtungssystems, die zum Installieren an Bord eines Flugzeugs (34) konfiguriert ist, das über den Wolken fliegt, und die zum Arbeiten als Relais in großer Höhe zum Übertragen von Telemetriedaten genannten Weltraumbeobachtungsdaten mit einer hohen Rate zwischen mindestens einem Beobachtungssatelliten (4, 6), der sich in einer nicht geostationären Weise bewegt, und mindestens einer Zielbodenstation (12, 14, 16) zum Empfangen dieser Daten konfiguriert ist, wobei die Übertragung von dem oder den Beobachtungssatelliten an das Relais in großer Höhe in einem oder mehreren vorbestimmten Sichtfenstern des oder der sich vor dem Flugzeug (34) bewegenden Beobachtungssatelliten (4, 6) stattfinden kann, und die Übertragung der Daten vom Flugzeug zum Boden permanent stattfinden kann,
wobei die Relaisplattform Folgendes umfasst:
eine erste Empfangsantenne (102), konfiguriert zum Empfangen, in einem ersten optischen oder Funkfrequenzband, von Beobachtungsdaten, die über eine erste drahtlose Downlink-Weltraumverbindung (122) übertragen werden, die mindestens einen sich bewegenden Beobachtungssatelliten mit der Relaisplattform verbindet, und
eine erste Empfangsschnittstelle (104), die mit der ersten Empfangsantenne (102) verbunden und so konfiguriert ist, dass sie die von der ersten Antenne empfangenen Daten demoduliert und in einem Speicher (106) speichert, und
eine zweite Sendeschnittstelle (108), die zum Modulieren der in dem Speicher (106) gespeicherten Beobachtungsdaten und zum Senden, in einem zweiten Funkfrequenzband, der modulierten Daten über eine zweite Sendeantenne (110) auf einer zweiten drahtlosen Downlink-Luftverbindung (128) konfiguriert ist, die die Relais-Plattform direkt mit mindestens einer Zielbodenstation (12, 14, 16) verbindet, und
wobei die Relais-Plattform **dadurch gekennzeichnet ist, dass** sie Folgendes umfasst:
eine erste Ent-/Verschlüsselungskette mit doppelter Downlink-Ebene (204) für Telemetriedaten, die von mindestens einem sich bewegenden Beobachtungssatelliten (4, 6) zu der oder den Zielbodenstation (en) (12, 14, 16) zurückgeführt werden.

2. Kommunikationsrelais-Plattform nach Anspruch 1, wobei
das erste Frequenzband der ersten drahtlosen Downlink-Weltraumverbindung (122) ein optisches oder Funkfrequenzband ist, und/oder
das zweite Frequenzband der zweiten Downlink-Luftverbindung (128) ein optisches oder Funkfrequenzband ist.

3. Kommunikationsrelais-Plattform nach einem der Ansprüche 1 bis 2, die ferner Folgendes umfasst:
eine dritte Empfangsschnittstelle (142), konfiguriert zum Demodulieren von gesicherten Fernsteuerungsdaten der Relais-Plattform und/oder den ein oder mehreren sich bewegenden Beobachtungssatelliten, erzeugt und übertragen über eine dritte dedizierte Verbindung (152) durch ein Erdkontrollzentrum (46) des Weltraumbeobachtungssystems.

4. Kommunikationsrelais-Plattform nach einem der Ansprüche 1 bis 3, wobei
die erste Ent-/Verschlüsselungskette (204) mit doppelter Downlink-Ebene konfiguriert ist zum:
- Entschlüsseln auf einer ersten Downlink-Ebene, für jeden sich bewegenden Beobachtungssatelliten (4, 6) und die entsprechenden empfangenen Telemetriedaten, der Telemetriedaten, verschlüsselt und übertragen von dem sich bewegenden Beobachtungssatelliten auf der ersten Downlink-Weltraumverbindung (122) und demoduliert von der ersten Schnittstelle (104), unter Verwendung aktiver Entschlüsselungsschlüssel der ersten Downlink-Ebene für Telemetriedaten, die mit dem sich bewegenden Satelliten und aktiven Telemetriedaten-Ver-/Entschlüsselungs-Schlüsselindizes der ersten Downlink-Ebene assoziiert sind, wobei die aktiven Ver-/Entschlüsselungsschlüsselindizes gemeinsam mit den verschlüsselten Telemetriedaten übertragen werden und eindeutig mit dem sich bewegenden Beobachtungssatelliten und den aktiven Entschlüsselungsschlüsseln der ersten Downlink-Ebene assoziiert sind; dann
- Verschlüsseln, für jede Zielbodenstation (12, 14, 16) und die entsprechenden für sie bestimmten Teledmetriedaten, die auf der ersten Downlink-Ebene entschlüsselt wurden und von einem oder mehreren Beobachtungssatelliten (4, 6) kommen, auf einer zweiten Downlink-Ebene, der auf der ersten Downlink-Ebene entschlüsselten Telemetriedaten unter Verwendung eines aktiven Telemetriedaten-Verschlüsselungsschlüssels der zweiten Downlink-Ebene, der mit der Zielbodenstation assoziiert ist, und Anhängen, an die verschlüsselten Daten der zweiten Downlink-Ebene, eines aktiven Telemetriedaten-Ver-/Entschlüsselungs-Schlüsselindexes der zweiten Downlink-Ebene, der eindeutig mit der Zielbodenstation und dem aktiven Verschlüsselungsschlüssel der zweiten Downlink-Ebene assoziiert ist.

5. Kommunikationsrelais-Plattform nach Anspruch 4, wobei
die erste Ent-/Verschlüsselungskette (204) mit doppelter Downlink-Ebene für die Telemetriedaten, die von dem/den sich bewegenden Satellit(en) (4, 6) zu der/den Zielbodenstation(en) (4, 6) zurückgeführt werden, ein erstes Modul (212) zum Verwalten der Ver-/Entschlüsselungsschlüssel mit doppelter Downlink-Ebene, ein zweites Entschlüsselungsmodul (214) auf einer ersten Downlink-Ebene für Telemetriedaten, übertragen auf der ersten Downlink-Weltraumverbindung (122) und demoduliert durch die erste Schnittstelle (104), und ein drittes Verschlüsselungsmodul (216) auf einer zweiten Downlink-Ebene für Telemetriedaten umfasst, die auf der ersten Downlink-Ebene entschlüsselt wurden; und
das erste Modul (212) zum Verwalten der Telemetriedaten-Ver-/Entschlüsselungsschlüssel mit doppelter Downlink-Ebene konfiguriert ist zum:
- anfänglichen Empfangen eines ersten Satzes von einem oder mehreren Telemetriedaten-Entschlüsselungsschlüsselsätzen der ersten Downlink-Ebene; und
- anfänglichen Empfangen eines zweiten Satzes von einem oder mehreren Telemetriedaten-Verschlüsselungsschlüsselsätzen der zweiten Downlink-Ebene; und
wobei jeder Satz von Telemetriedaten-Entschlüsselungsschlüsseln in Bezug auf die erste Downlink-Ebene mit einem sich bewegenden Beobachtungssatelliten assoziiert ist und jeder Telemetriedaten-Entschlüsselungsschlüssel auf der ersten Downlink-Ebene jedes Satzes mit einem Ver-/Entschlüsselungsschlüsselindex der ersten Downlink-Ebene übereinstimmt und durch diesen eindeutig identifiziert wird; und
jeder Satz von Telemetriedaten-Verschlüsselungsschlüsseln in Bezug auf die zweite Downlink-Ebene mit einer Zielbodenstation assoziiert ist und jeder Telemetriedaten-Verschlüsselungsschlüssel auf der zweiten Downlink-Ebene jedes Satzes mit einem Ver-/Entschlüsselungsschlüsselindex der zweiten Downlink-Ebene übereinstimmt und durch diesen eindeutig identifiziert wird.

6. Kommunikationsrelais-Plattform nach Anspruch 5, wobei
das erste Modul (212) zum Verwalten der Ver-/Entschlüsselungsschlüssel mit doppelter Downlink-Ebene für Telemetriedaten zum Ausführen, beim Empfang dedizierter Fernsteuerungen über die dritte Schnittstelle, gesichert und gesendet von dem Erdkontrollzentrum, von Modifikationen einiger oder aller Telemetriedaten-Entschlüsselungsschlüssel auf der ersten Downlink-Ebene und/oder Telemetriedaten-Verschlüsselungsschlüssel auf der zweiten Downlink-Ebene konfiguriert ist.

7. Kommunikationsrelais-Plattform nach einem der Ansprüche 4 bis 6, wobei
die erste Empfangsantenne (102), die erste Empfangsschnittstelle (104) und der Speicher (106) zum separaten Empfangen, Demodulieren und Speichern von Telemetriedaten konfiguriert sind, verschlüsselt auf der ersten Downlink-Ebene und gesendet von mindestens zwei nicht geostationären, sich bewegenden Beobachtungssatelliten auf der ersten Downlink-Weltraumverbindung (122), und/oder
die zweite Sendeantenne (110), die zweite Sendeschnittstelle (108), zum separaten Modulieren und Senden der verschlüsselten Telemetriedaten auf der zweiten Downlink-Ebene zu mindestens einer Zielbodenstation auf der zweiten drahtlosen Downlink-Luftverbindung (128) konfiguriert sind; und
die erste Ent-/Verschlüsselungskette (204) mit doppelter Downlink-Ebene für Telemetriedaten, zurückgeführt von dem oder den sich bewegenden Satelliten (4, 6) zu der oder den Zielbodenstationen (12, 14, 16), einen Matrix-Zuweiser (224) für die entschlüsselten Telemetriedaten umfasst, die von einem selben sich bewegenden Beobachtungssatelliten an verschiedenen Zielbodenstationen gemäß einer ferngesteuert geladenen Zuordnungstabelle (226) empfangen werden,
wobei der Matrixzuteiler (224) zwischen dem zweiten Entschlüsselungsmodul (214) und dem dritten Verschlüsselungsmodul (216) in Reihe geschaltet ist.

8. Kommunikationsrelais-Plattform nach einem der Ansprüche 1 bis 7, die ferner Folgendes umfasst:
eine zweite Fernsteuerungsdaten-Ent-/Verschlüsselungskette (254) mit doppelter Uplink-Ebene des oder der sich bewegenden Beobachtungssatellit(en), die über die dritte Empfangsschnittstelle (142) der dritten dedizierten gesicherten Fernsteuerverbindung (152) empfangen werden, die von dem Erdkontrollzentrum (46) kommt.

9. Kommunikationsrelais-Plattform nach Anspruch 8, wobei
die zweite Fernsteuerungsdaten-Ent-/Verschlüsselungskette (254) mit doppelter Uplink-Ebene des/der sich bewegenden Beobachtungssatelliten (4, 6) konfiguriert ist zum:
- Entschlüsseln auf einer ersten Uplink-Ebene, für jeden sich bewegenden Zielbeobachtungssatelliten (4, 6) und die entsprechenden Fernsteuerungsdaten des Satelliten, der Fernsteuerungsdaten, übertragen vom Erdkontrollzentrum (46) auf der dritten Verbindung (152) und demoduliert von der dritten Schnittstelle (142) unter Verwendung eines aktiven Fernsteuerungsdaten-Entschlüsselungsschlüssels der ersten Uplink-Ebene, assoziiert mit dem Beobachtungssatelliten und mit einem aktiven Fernsteuerungsdaten-Ver-/Entschlüsselungsschlüsselindex der ersten Uplink-Ebene, wobei der aktive Fernsteuerungsdaten-Ver-/Entschlüsselungsschlüsselindex zusammen mit den verschlüsselten Fernsteuerdaten von dem Erdkontrollzentrum (46) übertragen wird und mit dem sich bewegenden Satelliten und dem Entschlüsselungsschlüssel der ersten Uplink-Ebene eindeutig assoziiert ist; dann
- Verschlüsseln auf einer zweiten Uplink-Ebene, für jeden sich bewegenden Zielbeobachtungssatelliten (4, 6) und die dafür bestimmten entschlüsselten Fernsteuerungsdaten, der auf der zweiten Uplink-Ebene entschlüsselten Fernsteuerungsdaten unter Verwendung eines aktiven Fernsteuerungsdaten-Verschlüsselungsschlüssels der zweiten Uplink-Ebene, wobei der aktive Fernsteuerungsdaten-Verschlüsselungsschlüssel der zweiten Uplink-Ebene mit dem Zielbeobachtungssatelliten assoziiert ist, und Anhängen, an die Fernsteuerungsdaten der zweiten Uplink-Ebene, eines aktiven Fernsteuerung-Ver-/Entschlüsselungsschlüsselindexes, der mit dem Beobachtungssatelliten und dem aktiven Verschlüsselungsschlüssel der zweiten Uplink-Ebene eindeutig assoziiert ist.

10. Kommunikationsrelais-Plattform nach Anspruch 9, die ferner Folgendes umfasst:
eine vierte Sendeschnittstelle (256), konfiguriert zum Modulieren der Fernsteuerungsdaten von mindestens einem sich bewegenden Beobachtungssatelliten (4, 6) und zum Senden der modulierten Fernsteuerungsdaten über eine vierte Sendeantenne (258) auf einer vierten drahtlosen Uplink-Weltraumverbindung (260), die die Relais-Plattform direkt mit dem/den sich bewegenden Beobachtungssatellit(en) (4, 6) verbindet;
und wobei die zweite Fernsteuerungsdaten-Ver-/Entschlüsselungskette (254) mit doppelter Uplink-Ebene des/der sich bewegenden Beobachtungssatelliten ein viertes Modul (262) zum Verwalten von Ver-/Entschlüsselungsschlüsseln der doppelten Uplink-Ebenen, ein fünftes Fernsteuerungsdaten-Entschlüsselungsmodul (264) auf einer ersten Uplink-Ebene, die auf der dritten Verbindung (152) übertragen und von der dritten Schnittstelle (142) demoduliert werden, und ein sechstes Verschlüsselungsmodul (266) auf einer zweiten Uplink-Ebene für die Fernsteuerungsdaten umfasst, die auf der ersten Uplink-Ebene entschlüsselt wurden; und
das vierte Modul (262) zum Verwalten der Fernsteuerung-Ver-/Entschlüsselungsschlüssel mit doppelter Uplink-Ebene des/der sich bewegenden Satelliten ferner konfiguriert ist zum
- anfänglichen Empfangen eines dritten Satzes von einem oder mehreren Sätzen von Fernsteuerung- Entschlüsselungsschlüsseln der ersten Uplink-Ebene,
- anfänglichen Empfangen eines vierten Satzes von einem oder mehreren Fernsteuerung-Verschlüsselungsschlüsselsätzen der zweiten Uplink-Ebene; und
wobei jeder Satz von Fernsteuerung-Entschlüsselungsschlüsseln in Bezug auf die erste Uplink-Ebene mit einem sich bewegenden Beobachtungssatelliten assoziiert ist und jeder Fernsteuerungsdaten-Entschlüsselungsschlüssel auf der ersten Uplink-Ebene jedes Satzes mit einem Fernsteuerungsdaten-Ver-/Entschlüsselungsschlüsselindex mit der ersten Uplink-Ebene übereinstimmt und durch diesen eindeutig identifiziert wird; und
jeder Satz von Fernsteuerung-Verschlüsselungsschlüsseln in Bezug auf die zweite Uplink-Ebene mit einem sich bewegenden Zielbeobachtungssatelliten assoziiert ist, wobei jeder Fernsteuerungsdaten-Verschlüsselungsschlüssel auf der zweiten Uplink-Ebene jedes Satzes mit einem Ver-/Entschlüsselungsschlüsselindex der zweiten Uplink-Ebene übereinstimmt und durch diesen eindeutig identifiziert wird.

11. Kommunikationsrelais-Plattform nach Anspruch 10, wobei
das vierte Modul (262) zum Verwalten der Fernsteuerungsdaten-Ver-/Entschlüsselungsschlüssel mit doppelter Ebenen des/der sich bewegenden Satelliten zum Ausführen, beim Empfang, über die dritte Schnittstelle (142), von dedizierten Fernsteuerungen, gesichert und gesendet von dem Erdkontrollzentrum (46), von Modifikationen einiger oder aller Fernsteuerungsdaten-Entschlüsselungsschlüssel auf der ersten Uplink-Ebene und/oder Fernsteuerungsdaten-Verschlüsselungsschlüssel auf der zweiten Uplink-Ebene konfiguriert ist.

12. Kommunikationsrelais-Plattform nach einem der Ansprüche 1 bis 11, die ferner Folgendes umfasst:
eine fünfte Sendeschnittstelle (362), konfiguriert zum Modulieren der im Speicher (106) gespeicherten Beobachtungsdaten und zum Senden, in einem fünften optischen oder Funkfrequenzband, der modulierten Daten über eine fünfte Sendeantenne (364) auf einer fünften drahtlosen Uplink-Weltraumverbindung (372), die die Relais-Plattform direkt mit einem geostationären Satelliten (342) verbindet,
wobei der Speicher (106) zum Leiten, in einer vom Boden kontrollierten Weise durch Senden eines dedizierten Befehls (376), der Telemetriedaten auf der fünften Sendeschnittstelle (362) anstatt der zweiten Sendeschnittstelle (108) konfiguriert ist, die in einem Nennmodus als Zielport genommen wird.

13. Weltraumsystem, das mindestens einen nicht geostationären (4, 6) sich bewegenden Beobachtungssatelliten (4, 6), mindestens eine Zielbodenstation (12, 14, 16) zum Empfangen von mit hoher Rate von dem mindestens einen Beobachtungssatelliten (4, 6) übertragenen Beobachtungsdaten, ein Flugzeug (34), das in einer großen Höhe fliegt, die die der Wolken übersteigt, und eine Kommunikationsrelais-Plattform (32) an Bord des Flugzeugs (34) umfasst, die als Relais zum Übertragen von den Beobachtungs- oder Telemetriedaten zwischen dem mindestens einen Beobachtungssatelliten (4, 6) und den mindestens zwei Zielbodenstationen (12, 14, 16) zum Empfangen von Daten dient, wobei
die Kommunikationsrelais-Plattform (32; 332) gemäß einem der Ansprüche 1 bis 12 definiert ist, und
das Flugzeug (34) in der Gruppe bestehend aus Drohnen, lenkbaren Stratosphären-Ballons oder Flugzeugen enthalten ist.

14. Weltraumsystem nach Anspruch 13, das ferner einen geostationären Satelliten (342) und mindestens eine entfernte und versetzte Bodenstation (320) umfasst, die mit dem geostationären Satelliten (342) durch eine geostationäre Downlink-Weltraumverbindung verbunden ist, und wobei
die Relais-Plattform (332) eine fünfte Sendeschnittstelle (362) umfasst, konfiguriert zum Modulieren der in dem Speicher (106) gespeicherten Beobachtungsdaten und zum Senden, in einem fünften optischen oder Funkfrequenzband, der modulierten Daten über eine fünfte Sendeantenne (364) auf einer fünften drahtlosen Uplink-Weltraumverbindung (372), die die Relais-Plattform direkt mit einem geostationären Satelliten (342) verbindet,
wobei der Speicher (106) zum Leiten, in einer vom Boden kontrollierten Weise durch Senden eines dedizierten Befehls (376), der Telemetriedaten auf der fünften Sendeschnittstelle (362) anstatt der zweiten Sendeschnittstelle (108) konfiguriert ist, die in einem Nennmodus als Zielport verwendet wird.

## Claims

1. A communication relay platform of a space observation system, configured to be installed on board an aircraft (34) moving above the clouds, and configured to act as a high-altitude relay for transmitting space observation data, referred to as telemetry data, at a high throughput, between at least one non-geostationary moving observation satellite (4, 6) and at least one target ground station (12, 14, 16) for receiving said data, the transmission from the observation satellite or satellites to the high-altitude relay being capable of taking place during one or more predetermined visibility windows of the observation satellite or satellites (4, 6) moving relative to the aircraft (34), and the transmission of data from the aircraft to the ground being capable of taking place constantly,
the relay platform comprising
a first receiving antenna (102), configured to receive, in a first optical or radio frequency band, observation data transmitted over a first wireless space downlink (122) linking at least one moving observation satellite to the relay platform, and
a first reception interface (104), connected to the first receiving antenna (102) and configured to demodulate the data received by the first antenna and save it in a memory (106), and
a second transmission interface (108), configured to modulate the observation data stored in the memory (106), and transmit said modulated data in a second radio frequency band via a second transmission antenna (110) over a second wireless aerial downlink (128) directly linking the relay platform to at least one target ground station (12, 14, 16), and
the relay platform being **characterized in that** it comprises
a first descending two-level decryption/encryption chain (204) for the telemetry data returned from at least one moving observation satellite (4, 6) to the target ground station or stations (12, 14, 16).

2. The communication relay platform according to claim 1, wherein
the first frequency band of the first wireless space downlink (122) is an optical or radio frequency band, and/or
the second frequency band of the second aerial downlink (128) is an optical or radio frequency band.

3. The communication relay platform according to any one of claims 1 to 2, further comprising:
a third reception interface (142) configured to demodulate secure remote control data of the relay platform and/or of the moving observation satellite(s), generated and transmitted over a third dedicated link (152) by a terrestrial control center (46) of the space observation system.

4. The communication relay platform according to any one of claims 1 to 3, wherein the first descending two-level decryption/encryption chain (204) is configured:
- for each moving observation satellite (4, 6) and the corresponding received telemetry data, to decrypt, at a first descending level, said telemetry data, encrypted and transmitted by said moving observation satellite over the first space downlink (122) and demodulated by the first interface (104), by using active keys for decrypting the telemetry data of the first descending level, associated with said moving satellite and with indices of active keys for encrypting/decrypting the telemetry data of the first descending level, said indices of active encryption/decryption keys being transmitted together with said encrypted telemetry data and being associated, in a unique manner, with said moving observation satellite and with said active decryption keys of the first descending level; then
- for each target ground station (12, 14, 16) and the corresponding telemetry data intended for same, decrypted at the first descending level and originating from one or more observation satellites (4, 6), to encrypt, at a second descending level, the telemetry data decrypted at the first descending level by using an active key for encrypting the telemetry data of the second descending level, associated with said target ground station, and to append, to said encrypted data of the second descending level, an index of an active key for encrypting/decrypting the telemetry data of the second descending level, associated, in a unique manner, with said target ground station and with said active encryption key of the second descending level.

5. The communication relay platform according to claim 4, wherein
the first descending two-level decryption/encryption chain (204) for the telemetry data, returned from the moving satellite(s) (4, 6) to the target ground station(s), comprises a first module (212) for managing the descending two-level encryption/decryption keys, a second module (214) for decrypting, at a first descending level, the telemetry data transmitted over the first space downlink (122) and demodulated by the first interface (104), and a third module (216) for encrypting, at a second descending level, the telemetry data decrypted at the first descending level; and
the first module (212) for managing the descending two-level encryption/decryption keys for the telemetry data is configured to
- initially receive a first group of one or more sets of keys for decrypting telemetry data of the first descending level; and
- initially receive a second group of one or more sets of keys for encrypting telemetry data of the second descending level; and
each set of keys for decrypting telemetry data concerning the first descending level is associated with a moving observation satellite, and each key for decrypting telemetry data at the first descending level of each set is paired with and identified in a unique manner by an index of an encryption/decryption key of the first descending level; and
each set of keys for encrypting telemetry data concerning the second descending level is associated with a target ground station, and each key for encrypting telemetry data at the second descending level of each set is paired with and identified in a unique manner by an index of an encryption/decryption key at the second descending level.

6. The communication relay platform according to claim 5, wherein
the first module (212) for managing the descending two-level encryption/decryption keys for the telemetry data is configured to execute, on receipt, via the third interface, of dedicated remote control, secured and sent by the terrestrial control center, modifications of part or all of the keys for decrypting the telemetry data at the first descending level and/or the keys for encrypting telemetry data at the second descending level.

7. The communication relay platform according to any one of claims 4 to 6, wherein
the first receiving antenna (102), the first reception interface (104) and the memory (106) are configured to separately receive, demodulate and save telemetry data, encrypted at the first descending level and transmitted by at least two non-geostationary moving observation satellites over the first space downlink (122), and/or
the second transmission antenna (110), the second transmission interface (108), are configured to separately modulate and transmit the telemetry data encrypted at the second descending level to at least one target ground station over the second wireless aerial downlink (128); and
the first descending two-level decryption/encryption chain (204) for the telemetry data, returned from the moving satellite(s) (4, 6) to the target ground station(s) (12, 14, 16), comprises a matrix allocator (224) for the decrypted telemetry data, received from a given moving observation satellite, to different target ground stations, according to an allocation table (226) loaded by remote controls,
the matrix allocator (224) being connected in series between the second decryption module (214) and the third encryption module (216).

8. The communication relay platform according to any one of claims 1 to 7, further comprising
a second ascending two-level decryption/encryption chain (254) for the remote control data of the moving observation satellite(s) received via the third reception interface (142) of the third dedicated link for secure remote controls (152) originating from the terrestrial control center (46).

9. The communication relay platform according to claim 8, wherein
the second ascending two-level decryption/encryption chain (254) for the remote control data of the moving observation satellite(s) (4, 6) is configured:
- for each moving target observation satellite (4, 6) and the corresponding remote control data of said satellite, to decrypt, at a first ascending level, the remote control data transmitted by the terrestrial control center (46) over the third link (152) and demodulated by the third interface (142), by using an active key for decrypting the remote control data of the first ascending level, associated with said observation satellite and with an index of an active key for encrypting/decrypting the remote control data of the first ascending level, said index of the active key for encrypting/decrypting the remote control data being transmitted together with the encrypted remote control data by the terrestrial control center (46) and being associated, in a unique manner, with the moving satellite and with said decryption key of the first ascending level; then
- for each moving target observation satellite (4, 6) and the decrypted remote control data intended for it, to encrypt, at a second ascending level, the remote control data decrypted at the first ascending level by using an active key for encrypting the remote control data of the second ascending level, the active key for encrypting the remote control data of the second ascending level being associated with the target observation satellite, and to append, to said remote control data of the second ascending level, an index of an active key for encrypting/decrypting remote controls, associated, in a unique manner, with said observation satellite and with said active encryption key of the second ascending level.

10. The communication relay platform according to claim 9, further comprising
a fourth transmission interface (256), configured to modulate remote control data of at least one moving observation satellite (4, 6), and transmit said modulated remote control data via a fourth transmission antenna (258) over a fourth wireless space uplink (260) directly linking the relay platform to the moving observation satellite(s) (4, 6);
and wherein the second ascending two-level decryption/encryption chain (254) for the remote control data of the moving observation satellite(s) comprises a fourth module (262) for managing the ascending two-level encryption/decryption keys, a fifth module (264) for decrypting, at a first ascending level, the remote control data transmitted over the third link (152) and demodulated by the third interface (142), and a sixth module (266) for encrypting, at a second ascending level, the remote control data decrypted at the first ascending level; and
the fourth module (262) for managing the ascending two-level encryption/decryption keys for the remote controls of the moving satellite(s) is further configured to
- initially receive a third group of one or more sets of keys for decrypting remote controls of the first ascending level,
- initially receive a fourth group of one or more sets of keys for encrypting remote controls of the second ascending level; and
each set of keys for decrypting remote controls concerning the first ascending level is associated with a moving observation satellite, and each key for decrypting remote control data at the first ascending level of each set is paired with and identified in a unique manner by an index of an encryption/decryption key of the remote control data at the first descending level; and
each set of keys for encrypting remote controls concerning the second ascending level is associated with a moving target observation satellite, and each key for encrypting remote control data at the second ascending level of each set being paired with and identified in a unique manner by an index of an encryption/decryption key at the second ascending level.

11. The communication relay platform according to claim 10, wherein
the fourth module (262) for managing the two-level encryption/decryption keys for the remote control data of the moving satellite(s) is configured to execute, on receipt, via the third interface (142), of dedicated remote controls secured and sent by the terrestrial control center (46), modifications of part or all of the keys for decrypting the remote control data at the first ascending level and/or the keys for encrypting remote control data at the second ascending level.

12. The communication relay platform according to any one of claims 1 to 11, further comprising
a fifth transmission interface (362), configured to modulate the observation data stored in the memory (106), and transmit said modulated data in a fifth optical or radio frequency band, via a fifth transmission antenna (364), over a fifth wireless space uplink (372) directly linking the relay platform to a geostationary satellite (342),
the memory (106) being configured to route the telemetry data, in a manner controlled from the ground by sending a dedicated command (376), over the fifth transmission interface (362), instead of the second transmission interface (108) which is taken as the destination port in a nominal mode.

13. A space system comprising at least one non-geostationary (4, 6) moving observation satellite (4, 6), at least one target ground station (12, 14, 16) for receiving observation data transmitted at a high throughput by the at least one observation satellite (4, 6), an aircraft (34) moving at an altitude higher than the clouds, and a communication relay platform (32), installed on board the aircraft (34) and acting as a relay for transmitting the observation or telemetry data between the at least one observation satellite (4, 6) and the at least two target ground stations (12, 14, 16) for receiving the data, wherein
the communication relay platform (32; 332) is defined according to any one of claims 1 to 12, and
the aircraft (34) is included in the group made up of drones, steerable stratospheric balloons or airplanes.

14. The space system according to claim 13, further comprising a geostationary satellite (342) and at least one remote and offset ground station (320), connected to said geostationary satellite (342) by a geostationary space downlink, and wherein
the relay platform (332) comprises a fifth transmission interface (362), configured to modulate the observation data stored in the memory (106), and to transmit, in a fifth optical or radio frequency band, said modulated data via a fifth transmission antenna (364) over a fifth wireless space uplink (372) directly linking the relay platform to a geostationary satellite (342),
the memory (106) being configured to route the telemetry data, in a manner controlled from the ground by sending a dedicated command (376), over the fifth transmission interface (362), instead of the second transmission interface (108) which is taken as the destination port in a nominal mode.
